# EUROPÄISCHE PATENTSCHRIFT

(11) **EP 0 790 898 B1**
(45) Veröffentlichungstag und Bekanntmachung des Hinweises auf die Patenterteilung: **26.04.2000**
(21) Anmeldenummer: 95939290.3
(22) Anmeldetag: 17.11.1995
(51) Int. Cl.: B42D 15/10

(54) **VERFAHREN ZUR HERSTELLUNG EINES DATENTRÄGERS**
DATA CARRIER PRODUCTION PROCESS
PROCEDE DE FABRICATION DE SUPPORTS DE DONNEES

(30) Priorität: 18.11.1994 DE 4441198; 18.08.1995 DE 19530495
(43) Veröffentlichungstag der Anmeldung: 27.08.1997
(73) Patentinhaber: Giesecke & Devrient GmbH, 81677 München (DE)
(72) Erfinder: HOPPE, Joachim, D-81667 München (DE); HAGHIRI-TEHRANI, Yahya, D-80797 München (DE); HOHMANN, Arno, D-81369 München (DE); STRASSMAIER, Josef, D-83550 Emmering (DE); GAUCH, Wolfgang, D-83624 Otterfing (DE); BERGMANN, Matthias, D-83569 Vogtareuth (DE); DAX, Gustav, D-83052 Heufeld (DE)
(74) Vertreter: Klunker . Schmitt-Nilson . Hirsch
(86) Internationale Anmeldenummer: EP9504528
(87) Internationale Veröffentlichungsnummer: WO9615912

(56) Entgegenhaltungen:
- EP-A- 0 216 626
- EP-A- 0 219 012
- EP-A- 0 323 108

## Beschreibung

Die Erfindung betrifft einen Datenträger mit einem Teilbereich, der eine Oberfächenstruktur in Form einer Linsenstruktur aufweist, die in einer lichtdurchlässigen Kunststoffschicht vorgesehen ist und mit Informationen in Form von Zeichen oder Mustern, die zumindest teilweise durch die Oberflächenstruktur mit Hilfe eines Lasers eingebracht sind. Ferner betrifft die Erfindung ein Halbzeug in Form eines Endlosbandes für die Herstellung eines derartigen Datenträgers sowie Verfahren und Vorrichtungen zur Herstellung des Datenträgers.

Man ist seit langem bemüht, Datenträger, wie z.B. Ausweiskarten, Kreditkarten oder Wertpapiere, mit besonderen Sicherheitsmerkmalen zu versehen, die einerseits einen auffälligen, nicht kopierbaren visuellen Effekt aufweisen und andererseits eine möglichst kostengünstige Herstellung gewährleisten.

Aus der EP 0 323 108 A2 ist beispielsweise ein mehrschichtiger Datenträger mit einer transparenten Deckfolie bekannt, in welche vollflächig eine Oberflächenrelief in Form einer Linsenstruktur, bevorzugt ein Zylinderlinsenraster, eingebracht ist. Unter der Linsenstruktur befindet sich ein Substrat mit einer Fotoemulsionsschicht, die vor dem Auflaminieren der Deckfolie mit Informationen belichtet wurde. Für die Belichtung muß ein spezielles Linsensystem verwendet werden, um zu gewährleisten, daß die Informationen am fertigen Datenträger durch die Linsenstruktur der Deckfolie hindurch unverzerrt erkennbar sind. Die Herstellung dieses Datenträgers erfordert demnach eine sehr hohe Präzision bei der Registerführung.

Diesen Aufwand vermeidet das aus der EP 0 219 012 A1 bekannte Verfahren. Hier wird zuerst der Datenträger mit dem Linsenraster fertiggestellt. Anschließend werden durch dieses Linsenraster hindurch mittels eines Lasers Informationen in darunterliegende Volumenbereiche des Datenträgers eingebracht, die als geschwärzte Bereiche visuell gut zu erkennen sind. Aufgrund der Focuswirkung der Linsen werden nur schmal begrenzte Bereiche des Datenträgers geschwärzt, so daß die Informationen lediglich unter dem Betrachtungswinkel beobachtet werden können, der dem Einfallswinkel des Lasers auf die Linsenstruktur entspricht. Auf diese Weise können bei Verwendung verschiedener Beschriftungswinkel mehrere nur unter bestimmten Betrachtungswinkeln erkennbare Informationen eingeschrieben werden. Dieser Effekt wird im folgenden als "Kippbild" bezeichnet.

Dieses Kippbild besitzt eine Reihe von sicherheitstechnisch relevanten Vorteilen. So ist beispielsweise weder mit fotografischen noch mit kopiertechnischen Mitteln reproduzierbar, da unter einem Aufnahmewinkel nie gleichzeitig alle Kippbild-Informationen vorliegen. Der gefälschte Datenträger zeigt somit lediglich eine der Informationen und diese unter allen Betrachtungswinkeln. Der Kippbildeffekt ist verschwunden. Zudem bietet die Laserbeschriftung einen zusätzlichen Fälschungsschutz. Denn bei der Laserbeschriftung werden im Inneren des Datenträgermaterials sichtbare Veränderungen hervorgerufen, die weder chemisch noch mechanisch ohne vollständige Zerstörung des Datenträgers entfernt oder geändert werden können.

Dieses Sicherheitsmerkmal bietet auch bezüglich der wirtschaftlichen Herstellung von Datenträgern einige Vorteile. Denn die Beschriftung des Linsenrasterbereichs erfolgt erst nach der Fertigstellung des Datenträgers, so daß hierbei eventuell anfallender Ausschuß nicht beschriftet und daher komplizierte Abläufe für ein nachträgliches Herstellen eines neuen Datenträgers mit dem gleichen Datensatz vermieden werden. Dies gilt insbesondere für den Fall, daß die Kippbildinformation benutzerbezogen ausgeführt ist.

Die Herstellung der Linsenstruktur erfolgte bisher entweder während der Herstellung des Datenträgers oder nach seiner Fertigstellung durch Einprägen mit einem Prägestempel. Durch die Erhitzung des Datenträgermaterials und den hierauf ausgeübten Druck kommt es allerdings leicht zu irreparablen Verzügen und zu störenden Durchprägungen auf die Datenträgerrückseite, die häufig als Druckfläche benutzt wird.

Daher werden die Linsenstrukturen bevorzugt während der Laminierung der Datenträger eingebracht, indem eine der Laminierplatten mit der negativen Linsenrasterstruktur versehen wird. Da die Laminierung üblicherweise im Bogenformat erfolgt, muß die Laminierplatte im Bereich jedes einzelnen Nutzens die entsprechend negative Reliefstruktur aufweisen. Dies hat den Nachteil, daß die gesamte Laminierplatte ausgetauscht werden muß, sobald im Bereich eines Nutzens ein Fehler auftritt. Ein weiterer Nachteil dieses Verfahrens ist darin zu sehen, daß durch das Einprägen der Linsenstruktur die Dicke des Datenträgers ungleichmäßig wird.

Der Erfindung liegt daher die Aufgabe zugrunde, einen Datenträger sowie Verfahren zu seiner Herstellung vorzuschlagen, die die genannten Nachteile des Stands der Technik nicht aufweisen.

Lösungen dieser Aufgabe werden in den unabhängigen Ansprüchen angegeben. Weiterbildungen ergeben sich aus den jeweiligen Unteransprüchen.

Gemäß einer bevorzugten Ausführungsform wird die Reliefstruktur mit Hilfe von entsprechend geformten spanabhebenden Werkzeugen, wie Hobel- oder Schleifwerkzeugen in den Datenträger eingebracht, der im Bereich der einzubringenden Linsenstruktur aus einem lichtdurchlässigen Kunststoff besteht. Wie aus Mikroskopschliffen ersichtlich ist, kann durch dieses Abtragsverfahren eine sehr glatte Linsenoberfläche mit guter optischer Qualität erzeugt werden. Dieses Verfahren eignet sich für alle üblichen Datenträgermaterialien, insbesondere auch für thermostabile Materialien, wie PC, bei denen die üblichen Prägeverfahren nicht angewendet werden können. Aufgrund des Materialabtrags weist der nach diesem Verfahren hergestellte Datenträger eine gegenüber der Datenträgeroberfläche leicht versenkte Linsenstruktur auf, d.h. die Dicke des Datenträgers wird durch die Linsenstruktur nicht verändert, wie es bei den bekannten Datenträgern der Fall ist. Dieser Umstand ist insbesondere bei der Stapelung der erfindungsgemäßen Datenträger von großem Vorteil. Durch das Absenken bzw. quasi Einbetten der Linsenstruktur in den Datenträger ist die Linsenoberfläche zudem optimal gegen Verschleiß durch Umwelteinflüsse geschützt.

Gemäß einer weiteren Ausführungsform können auch einzelne Prägematrizen eingesetzt werden, die nach einem vorgegebenen stufenweisen Heiz- und Druckzyklus arbeiten, um Verzüge des Datenträgermaterials zu vermeiden. Für dieses Verfahren wird bevorzugt eine Vorrichtung verwendet, die mehrere parallel arbeitende Prägestationen aufweist. Beim Einlauf eines einzelnen Datenträgers in die Vorrichtung wird auf den Datenträger ein Prägestempel aufgesetzt, der mit der Karte entlang einer vorgegebenen beispielsweise kreisförmig ausgeführten Transportstrecke mitbewegt wird. Während des Transports durch die Prägevorrichtung wird der mitbewegte Prägestempel entsprechend dem vorgegebenen Arbeitszyklus beheizt bzw. nachdem das Datenträgermaterial langsam erweicht und in die gewünschte Form gebracht wurde, gekühlt. Das Mitbewegen der Heiz- bzw. Kühleinrichtung hat den Vorteil, daß die gesamte Transportzeit als Prozeßzeit genutzt werden kann. Alternativ kann die Heiz-/Kühleinrichtung jedoch auch stationär angeordnet sein, was den Vorteil hat, daß die Temperatureinstellung zentral und stationär für die gesamte Vorrichtung erfolgen kann. Die Datenträger werden hier zusammen mit den aufgesetzten Prägestempeln durch die stationären Heiz-/Kühlstationen getaktet.

Die Option, den Temperatur- und Druckzyklus in weiten Bereichen steuern zu können, ohne größere Nachteile hinsichtlich der Produktivität in Kauf nehmen zu müssen, ermöglicht es auch, bei diesem Verfahren, Datenträger herzustellen, bei welchen die Linsenstruktur zu keiner Erhöhung der Datenträgerdicke führt. Durch die langsame Zustandsänderung kann das Datenträgermaterial sehr gleichmäßig und ohne Verzüge verformt und das überschüssige Datenträgermaterial gleichmäßig auf den gesamten Datenträger verteilt werden.

Um das Risiko von Verzügen weiter zu minimieren, kann die Datenträgeroberfläche vor dem Prägevorgang mit einer Lackschicht versehen werden, die während des Prägens thermoplastisch verformbar ist und erst anschließend vollständig ausgehärtet wird. Die gehärtete Lackschicht fungiert hierbei als eine Art Fixierschicht für die darunterliegende thermisch erweichte Zone des Datenträgermaterials, das nun nach dem eigentlichen Prägevorgang ohne zu verziehen, vollständig abkühlen und in der durch die Lackschicht vorgegebenen Form erhärten kann. Es ist allerdings auch möglich, lediglich in die Lackschicht einzuprägen. In diesem Fall ist die Gefahr von Verzügen vollständig gebannt, da das Datenträgermaterial selbst beim Prägen nicht beansprucht wird.

Für den Fall, daß der Datenträger mit einem lokal begrenzten Kippbildelement ausgestattet werden soll, können Verzüge sowie Verschleißerscheinungen auch vermieden werden, indem das Kippbildelement als separates Einzelelement gefertigt und anschließend in eine entsprechend dimensionierte Aussparung des Datenträgers eingebracht wird.

Die Herstellung des Linsenelements kann beispielsweise in einem kontinuierlichen Prägeverfahren erfolgen, bei dem eine transparente Folie im Rollenprägeverfahren mit der gewünschten Struktur versehen wird. Ebenso ist es denkbar, die Folie bereits beim Extrudieren mit der entsprechenden Oberflächenkontur auszustatten. Die Folie wird anschließend in die Einzelelemente gestanzt und in der Aussparung des Datenträgers z.B. durch Kleben oder Schweißen befestigt. Eine weitere Möglichkeit bietet das Spritzgußverfahren, mit dem direkt Einzelelemente der gewünschten Form hergestellt werden können.

Es sind auch Ausführungsformen möglich, bei welchen der Datenträger oder Teile desselben in Spritzgußtechnik hergestellt werden. So kann beispielsweise ein Datenträger spritzgegossen werden, welcher auf einer seiner Oberflächen lokal begrenzt die Linsenstruktur aufweist, deren Scheitelbereiche vorzugsweise bündig mit der Datenträgeroberfläche abschließen. Auf der gegenüberliegenden Seite des Datenträgers wird unterhalb der Linsenstruktur eine Aussparung vorgesehen, in welche ein separat hergestelltes Kunststoffelement eingesetzt wird. Dieses Element ist speziell auf die Anforderungen der Laserbeschriftung adaptiert, indem entweder das Elementmaterial mit Zusatzstoffen versetzt wird, welche die Laserstrahlung absorbieren oder das Element auf der dem Datenträger zugewandten Seite mit einer entsprechend präparierten Lackschicht beschichtet wird.

Eine weitere Variante besteht darin, eine Kunststoffolie zumindest einseitig mit einer transluzenten Schicht anzuspritzen, welche in einem Teilbereich die Linsenstruktur aufweist. Wird die Folie beidseitig mit einer Deckschicht im Spritzguß versehen, so kann auch die zweite Deckschicht in einem bestimmten Bereich eine Linsenstruktur aufweisen. In einer speziellen Ausführungsform können die Linsenstrukturen kongruent oder zumindest konzentrisch zueinander angeordnet werden. Falls erforderlich, kann die Kunststoffolie vor dem Aufbringen der Deckfolien im Bereich des aufzubringenden Linsenrasters mit einer für die Absorption von Laserstrahlung sensibilisierten Beschichtung versehen werden.

Die zuletzt geschilderten Verfahren können vollständig auf komplizierte und aufwendige Prägevorrichtungen innerhalb der Produktionslinie der Datenträger verzichten. Dadurch kann wirtschaftlicher und rationeller gefertigt werden. Denn das Herstellen kontinuierlich geprägter Folien bzw. das Spritzgießen von Einzelelementen kann kostengünstig erfolgen, da in einem kontinuierlichen Prozeß zu hohen Stückzahlen gefertigt werden kann, der lediglich den Randbedingungen für diesen einen Prozeß gerecht werden muß. Probleme, wie das Durchprägen auf die Rückseite des Datenträgers oder Verzüge entfallen.

Die erfindungsgemäßen Verfahren haben ferner den Vorteil, daß sie an der bezüglich ihres Schichtaufbaus fertigen Karte durchgeführt werden können, so daß Ausschußprobleme einfach zu handhaben sind. Denn im Falle eines fehlerhaft ausgeführten Bearbeitungsschritts kann der betroffene Datenträger sofort ausgesondert und durch einen nachfolgenden ersetzt werden.

Weitere Vorteile und vorteilhafte Ausführungsformen werden anhand der Figuren erläutert. Es wird darauf hingewiesen, daß die Figuren lediglich die wesentlichen Verfahrensschritte skizzieren und weder als vollständige noch als maßstabsgetreue Darstellung der einzelnen Vorrichtungen zu verstehen sind.

Die Figuren zeigen:
- Fig. 1: Datenträger mit Kippbild,
- Fig. 2: Schleifvorrichtung zur Einbringung der Linsenstruktur in den Datenträger im Querschnitt,
- Fig. 3: Seitenansicht der Schleifvorrichtung mit Luftkühlung,
- Fig. 4: Skizze einer Naßschleifvorrichtung,
- Fig. 5: Fräsvorrichtung zur Einbringung der Linsenstruktur in den Datenträger,
- Fig. 6: Datenträger mit dünner Lackschicht, wobei Lackschicht und Datenträger geprägt werden,
- Fig. 7: Datenträger mit dünner Lackschicht, in welche die Linsenstruktur eingeprägt wird,
- Fig. 8: Prägevorrichtung mit einer Vielzahl einzelner Prägestationen,
- Fig. 9: Schnitt durch eine einzelne Prägestation mit mitbewegter Heiz-/Kühlvorrichtung,
- Fig. 10: Datenträger mit Aussparung, in welche ein Einzelelement eingebracht ist,
- Fig. 11: Einzelelement mit Linsenstruktur,
- Fig. 12: geprägte Folie zur Herstellung von Einzelelementen,
- Fig. 13: Applizierung eines Linsenstrukturelements mittels Inmould-Technik,
- Fig. 14: Variante eines Einzelelements mit Linsenstruktur,
- Fig. 15: Datenträger mit einlaminiertem Einzelelement gemäß Fig. 14 und bei dem Einbau verwendeter Heizstempel,
- Fig. 16: Datenträger mit Aussparung und zugehörigem Einzelelement,
- Fig. 17: Einzelelement mit Registermarke,
- Fig. 18: weitere Variante eines Datenträgers mit Aussparung und eingesetztem separaten Element,
- Fig. 19: weitere Ausführungsform des erfindungsgemäßen Datenträgers,
- Fig. 20: Variante des in Fig. 19 gezeigten Datenträgers.

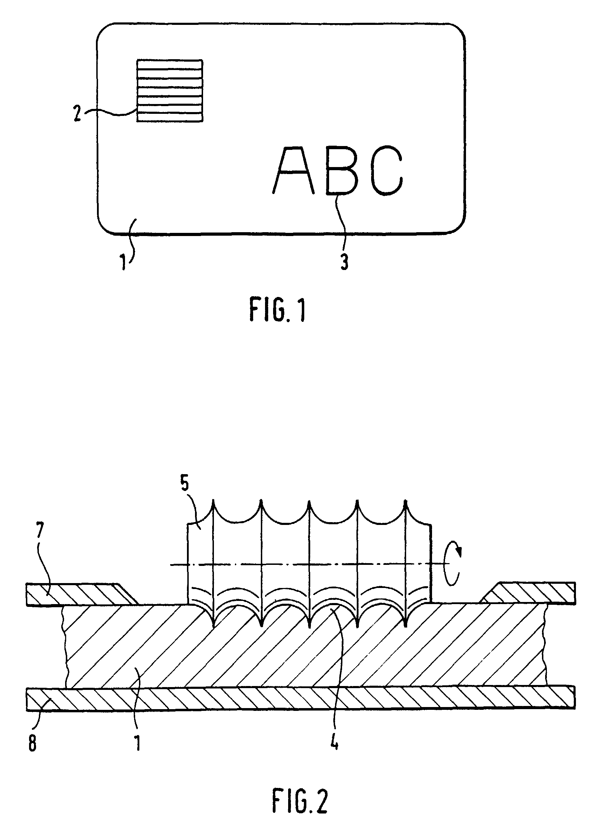

Fig. 1 zeigt einen Datenträger 1 gemäß der Erfindung. Es kann sich hierbei um eine ein- oder mehrschichtige Ausweiskarte handeln, deren Kartenkörper nach einem der bekannten Verfahren, wie Extrudieren, Laminieren oder Spritzgießen hergestellt ist, und die mit den allgemein üblichen Daten 3, wie z.B. dem Namen des Benutzers, einer Kontonummer und allgemeinen Daten bezüglich der ausgebenden Institution versehen ist. Die benutzerbezogenen Daten werden vorzugsweise mit einem Laser in den inneren Volumenbereich der Ausweiskarte eingebrannt, während die allgemeinen Angaben, wie z.B. hinsichtlich der ausgebenden Institution, mit drucktechnischen Verfahren auf eine der Kartenschichten aufgedruckt sind. Darüber hinaus kann der Datenträger auch andere, lediglich maschinenlesbare Datenspeichervorrichtungen aufweisen, wie z.B. einen integrierten Schaltkreis oder einen Magnetstreifen. Der erfindungsgemäße Datenträger 1 weist entsprechend der Darstellung in Fig. 1 zusätzlich in einem Teilbereich ein optisches Echtheitsmerkmal in Form eines Kippbildes 2 auf. Das Kippbildelement 2 besteht, wie bereits erläutert, aus einer Linsenstruktur, wobei es sich um Zylinder- und/oder Kugellinsen handeln kann, die entweder direkt aneinandergrenzen oder entsprechend einem vorgegebenen Muster angeordnet sein können und die in eine zumindest in Teilbereichen lichtdurchlässige Kunststoffschicht eingebracht sind. Dabei können zusätzlich die Brennweiten der einzelnen Linsen, z.B. entsprechend einem vorgegebenen Muster, variiert werden. Selbstverständlich kann sich das Kippbildelement 2 auch über den gesamten Datenträger 1 erstrecken.

Gemäß einer ersten Ausführungsform wird die Linsenstruktur mit Hilfe von spanabhebenden Werkzeugen, wie Schleif- oder Hobelwerkzeugen, in eine der Oberflächen des Datenträgers eingebracht.

Fig. 2 zeigt einen Schleifzylinder 5, dessen Oberfläche das negative Relief der Linsenstruktur 4 aufweist, und mit welchem der Datenträger 1 im Bereich des Kippbildelements 2 in Kontakt gebracht wird. Der Datenträger wird hierbei zwischen zwei Positionselementen 7, 8 plaziert, wobei eines der Elemente 7 im Bereich der einzubringenden Linsenstruktur 4 eine Öffnung aufweist. Die tatsächliche Ausgestaltung des Positioniermechanismus richtet sich nach den örtlichen Gegebenheiten und wird entsprechend diesen Anforderungen aus den bekannten Vorrichtungen ausgewählt.

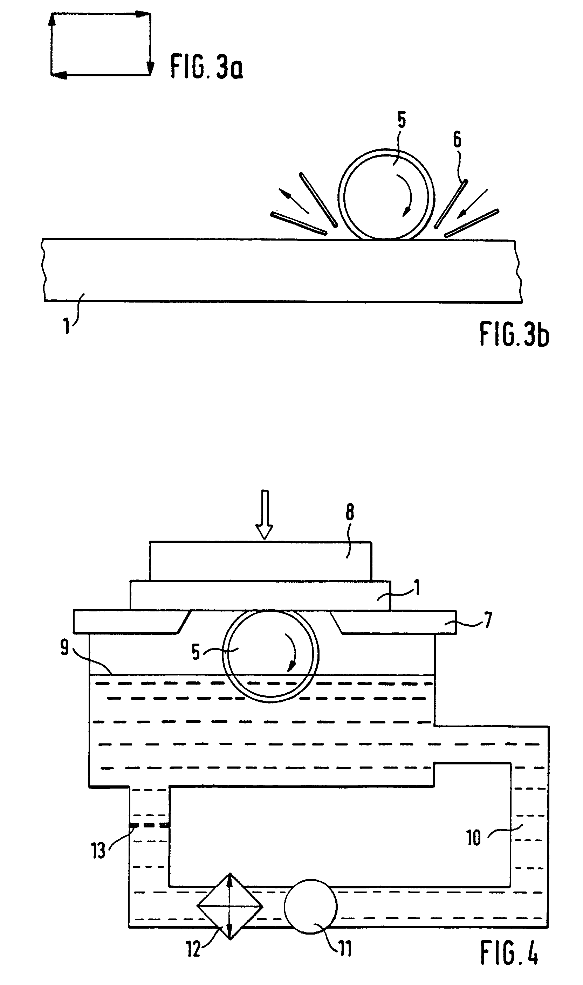

Während des Schleifvorgangs kann der bearbeitete Datenträgerbereich zusätzlich gekühlt werden. Die Fig. 3 und 4 zeigen diesbezügliche Varianten. Der Schleifzylinder 5 wird entsprechend dem in Fig. 3a dargestellten Bewegungszyklus über den Datenträger bewegt. Währenddessen wird der zu bearbeitende Bereich über das Luftleitungssystem 6, z.B. bestehend aus einer Düse oder einem einfachen Rohr, mit kühler bis kalter Luft beaufschlagt, wie in Fig. 3b gezeigt.

Alternativ kann auch ein Naßkühlungssystem Anwendung finden, dessen Grundprinzip in Fig. 4 dargestellt ist. Auch hier wird der Datenträger 1 in einer Spannvorrichtung 7, 8 fixiert. Der Schleifzylinder 5 wird ähnlich dem in Fig. 3a gezeigten Arbeitszyklus über den Datenträgerbereich bewegt und taucht während des Schleifens in die Schleifflüssigkeit 9, im einfachsten Fall Wasser, welche für die nötige Kühlung sorgt. Um die entstandene Wärme abführen zu können, wird die Schleifflüssigkeit 9 über das Leitungssystem 10 mit Hilfe einer Pumpe 11 in einem geschlossenen Kreislauf bewegt und gleichzeitig in einem Kühlsystem 12 erneut auf die gewünschte Temperatur gekühlt. Ein Filterelement 13 sorgt zusätzlich dafür, daß keine Schleifrückstände oder ähnliches in das Schleifbad 9 zurückgelangen.

Wird die Linsenstruktur 4 durch Hobeln mit Hilfe eines Profilmeißels erzeugt, so kann es allerdings auch nötig sein, das spanabhebende Werkzeug zu heizen, um einen guten Materialabtrag zu gewährleisten.

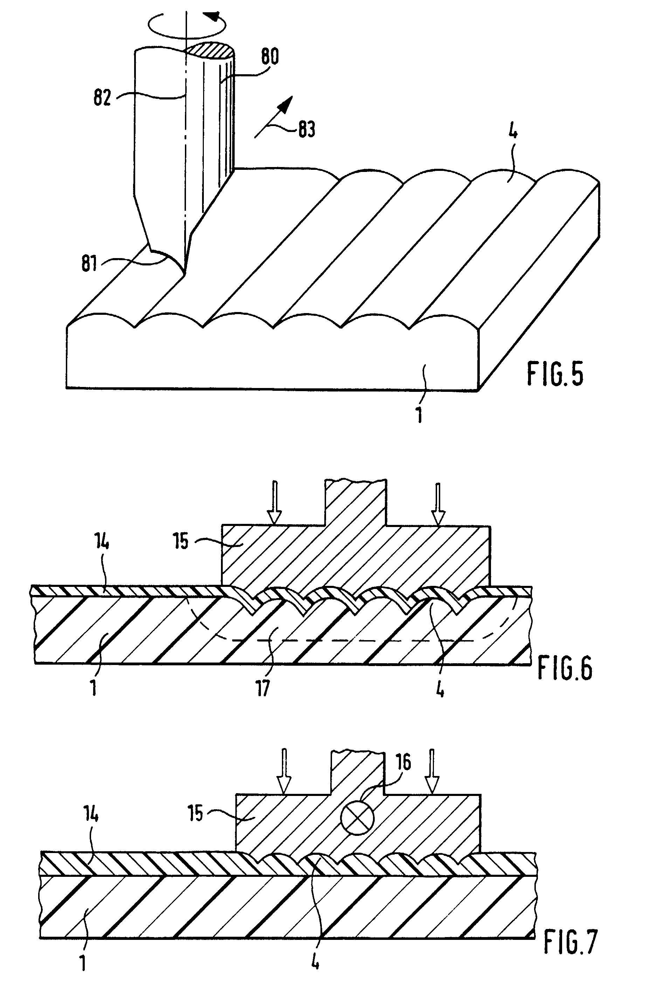

Eine andere Möglichkeit,in den Datenträger mit Hilfe spanabhebender Verfahren eine Linsenstruktur einzubringen, zeigt Fig. 5. Der spanabhebende Teil 81 des Fräswerkzeugs 80 weist hier die negative Form eines Viertelkreises auf. Während des Fräsvorgangs rotiert das Werkzeug 80 um die Achse 82 und wird gleichzeitig geradlinig in Richtung des Pfeils 83 bewegt, um die Zylinderlinsen 4 zu erzeugen. Der spanabhebende Teil 81 des Fräswerkzeugs 80 kann alternativ auch rotationssymmetrisch bezüglich der Achse 82 ausgeführt sein, so daß der fräsende Teil 81 eine schirmartige Form erhält. Je nach gewünschter Linsenform kann das Fräswerkzeug 80 selbstverständlich auch jede andere Form aufweisen. Ebenso frei wählbar ist die geometrische Ausgestaltung des Linsenelements. In Fig. 5 erstreckt sich das Linsenelement über den gesamten Datenträger, es kann jedoch auch nur lokal begrenzt und über die Steuerung des Fräswerkzeugs mit beliebigen Umrißkonturen ausgeführt werden.

Dieses Verfahren bietet ferner den Vorteil, daß sowohl eine Einzelkartenverarbeitung als auch eine Bearbeitung in Bogenform möglich ist. Zudem tritt keine Temperaturbelastung auf.

Entsprechend einer weiteren Ausführungsform kann der Datenträger 1 in einem beliebigen Druckverfahren, insbesondere im Sieb-, Tief- oder Tampondruck, mit einer dünnen Lackschicht 14 versehen werden. Anschließend wird mit einem Prägestempel 15 die Linsenstruktur 4 sowohl in die Lackschicht 14 als auch in den Oberflächenbereich 17 des Datenträgers 1 übertragen (Fig. 6). Die Lackschicht 14 kann dabei entweder vollflächig oder nur auf einen Teilbereich des Datenträgers aufgedruckt werden. Je nach verwendetem Lacksystem 14 kann vor dem Prägen eine Vorhärtung des Lacks 14 erfolgen, die den Lack in einen thermoplastischen Zustand versetzt. Die vollständige Aushärtung des Lacks erfolgt schließlich während oder nach der Prägung. Es können beispielsweise Lacksysteme aus chemisch nichtreagierenden Komponenten verwendet werden, wobei die erste Komponente physikalisch trocknet oder thermisch reaktiv härtet und die zweite durch Strahlung aushärtet. Durch Härtung der ersten Komponente entsteht der für die Prägung notwendige thermoplastische Zustand, der erst durch die Strahlungshärtung der zweiten Komponente aufgehoben wird. Es können jedoch auch einkomponentige, insbesondere strahlungshärtende Lacksysteme Anwendung finden. Erfolgt die Härtung während des Prägevorgangs, so muß der Prägestempel für die härtende Strahlung, z.B. UV- oder IR-Strahlung transparent sein. Die Strahlungsquelle 16 kann hierbei direkt in dem Prägestempel 15 angeordnet sein, wie in Fig. 6 dargestellt.

Es können jedoch auch verzögernd härtende Lacke eingesetzt werden. Hier wird der Vernetzungsvorgang im Lack kurz vor dem Prägevorgang durch Strahlung entsprechender Energie initiert. Die vollständige Vernetzung erfolgt zeitverzögert, so daß in der Zwischenzeit die Prägung in das noch weiche Material erfolgen kann. Bei Verwendung von Wärmestrahlung genügt allerdings auch ein Aufheizen des Stempels auf die erforderliche Temperatur. Dieses Verfahren hat den Vorteil, daß das Datenträgermaterial nicht stark beansprucht wird, da weniger Material verdrängt werden muß, was die Gefahr von Verzügen erheblich reduziert. Ferner wird das Prägeprofil in der Lackschicht 14 durch die Strahlungshärtung praktisch lackartig fixiert und dient somit als eine Art Fixierhaut für das darunterliegende erweichte Datenträgermaterial, welches dadurch nach dem Prägevorgang ohne Verzüge abkühlen kann.

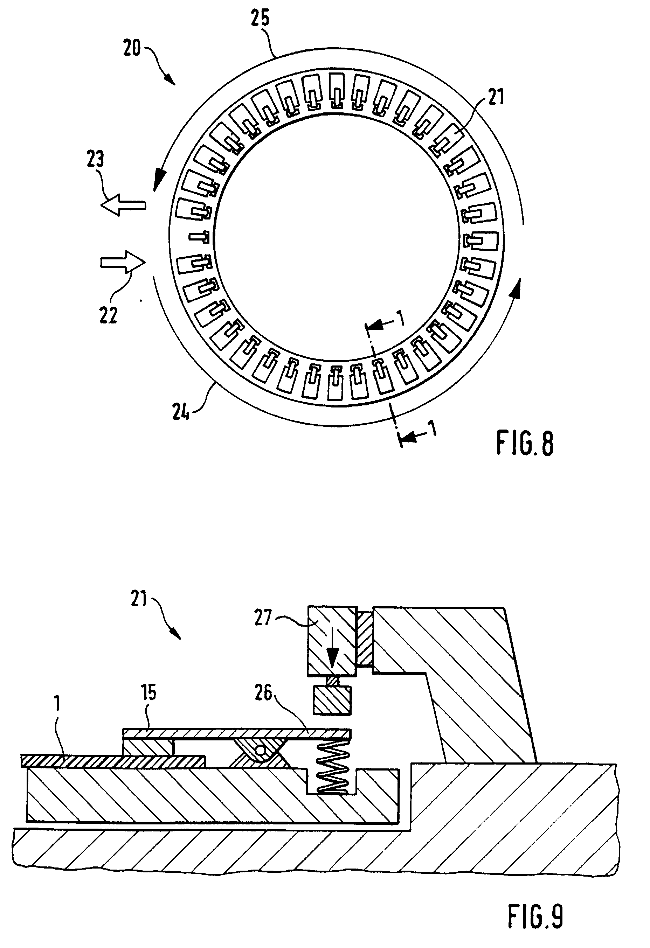

Eine weitere Möglichkeit, die Gefahr von Verzügen zu verringern, bietet das in Fig. 7 gezeigte Verfahren. Hier wird lediglich in die auf dem Datenträger vollflächig oder teilweise aufgebrachte Lackschicht 14 geprägt. In diesem Fall wird das Datenträgermaterial selbst durch den Prägevorgang nicht beeinträchtigt, so daß weder Verzüge noch Durchprägungen auf die Rückseite des Datenträgers entstehen können.

Das Prägen der einzelnen Datenträger erfolgt erfindungsgemäß in einer speziellen Prägevorrichtung, die ein paralleles Verarbeiten der einzelnen Datenträger erlaubt. Es ist hierbei völlig irrelevant, ob der Datenträger zuvor mit einer fixierenden Lackschicht, wie oben beschrieben, versehen wurde oder nicht. Der spezielle Prozeßablauf innerhalb der Vorrichtung ermöglicht es, auch in den Datenträger selbst verzugsfrei einzuprägen.

Fig. 8 zeigt eine Prägevorrichtung 20, die aus einer Vielzahl einzelner Prägestationen 21 besteht. Die nacheinander einlaufenden Datenträger - in der Fig. 8 durch den Pfeil 22 schematisch angedeutet - werden von den einzelnen Prägestationen 21 aufgenommen, mit dem dort befindlichen Prägestempel in Kontakt gebracht und zusammen mit der Prägestation 21 auf einer Kreisbahn zum Ausgangspunkt zurückbewegt, wo sie die Prägevorrichtung 20 wieder verlassen (Pfeil 23). Die Transportstrecke kann selbstverständlich auch jede beliebige andere Form aufweisen. Auch müssen die Datenträger nicht notwendigerweise zum Ausgangspunkt zurücktransportiert werden.

Während dem Umlauf der Prägestationen 21 werden die Datenträger langsam erhitzt, gleichzeitig mit der Linsenstruktur versehen und schließlich sehr langsam wieder abgekühlt. Durch die sehr langsame Temperatur- und Druckeinwirkung können Verzüge praktisch vermieden werden. Gemäß einer ersten Variante erfolgt die Temperaturänderung in jeder Prägestation 21 separat, d.h. die Heiz-/Kühleinrichtung wird mit der Prägestation 21 mitbewegt und beheizt bzw. kühlt den dort vorhandenen Prägestempel gemäß einer vorgegebenen Temperaturkurve. Alternativ kann die Heiz-/Kühleinrichtung auch stationär angeordnet sein, wobei z.B. während des Transports Prägestempel und Datenträger auf der Strecke 24 langsam erhitzt und entlang der Transportstrecke 25 ebenso langsam wieder abgekühlt werden. In diesem Fall wird die Prägestation 21, die den Datenträger mit dem aufgesetzten Prägestempel umfaßt, durch die Heiz-/Kühleinrichtung getaktet.

Fig. 9 zeigt einen Schnitt entlang der Linie 1 - 1 durch eine Prägestation 21 der Vorrichtung 20. Beim Einlauf des Datenträgers 1 in die Prägestation 21 wird der Prägestempel 15 auf den Datenträger 1 aufgesetzt und dort, wie z.B. in Fig. 9 dargestellt, durch eine Feder 26 fixiert. Denkbare Alternativen wären auch Druckluft oder elektrische bzw. hydraulische Spannvorrichtungen. Die Fixierung wird erst beim Verlassen der Prägestation 21 wieder gelöst. Die Temperatureinwirkung erfolgt über den Stempel 27, der stationär befestigt ist und die Wärme an den Prägestempel 15, der selbstverständlich wärmeleitend ausgeführt sein muß, weitergibt. Mit dem nächsten Maschinentakt wird die Prägestation 21 zum nächsten Heiz-/Kühlstempel 27 transportiert. Die im Grunde sehr lange Prozeßzeit wird dadurch abgefangen, daß die Datenträger einzeln und damit versetzt zueinander verarbeitet werden können. Nur zu Beginn des Produktionszyklus entsteht eine kurze Bearbeitungslücke, die gerade der Umlaufzeit einer Prägestation 21 entspricht. Im weiteren Verlauf der Fertigung verläßt mit jedem Maschinentakt ein Datenträger die Prägevorrichtung 20, so als wenn er während eines Maschinentaktes geprägt worden wäre. Die tatsächliche Prozeßzeit, die eine Vielzahl an Maschinentakten umfaßt, ermöglicht andererseits eine verzugsfreie Fertigung von Datenträgern, insbesondere auch von Datenträgern, bei welchen die Scheitelbereiche der Linsenstruktur mit der Datenträgeroberfläche abschließen bzw. gegenüber der Oberfläche leicht versenkt sind.

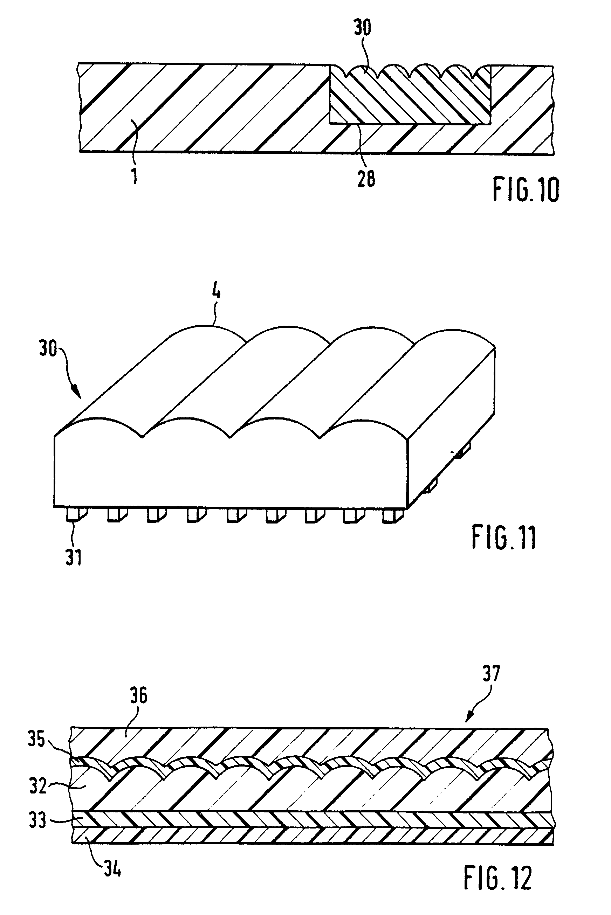

Eine weitere erfindungsgemäße Ausführungsform ist in Fig. 10 dargestellt. Hier wird der Datenträger 1 mit einer Aussparung 28, z.B. durch Fräsen oder entsprechendes Spritzgießen des Datenträgers 1, versehen. In diese Aussparung wird ein separat gefertigtes Einzelelement 30 eingesetzt und durch Kleben oder Verschweißen mit dem Datenträger 1 verbunden. Wird das Einzelelement 30 mit dem Datenträger 1 über Ultraschallbestrahlung verschweißt, so müssen an dem Einzelelement 30 Richtungsgeber 31, z. B. in Form von Noppen oder Streifen vorgesehen werden, die die auftreffende Strahlung bündeln, das Material lokal erhitzen und damit ein kontrolliertes Verschweißen ermöglichen (Fig. 11). Diese Richtungsgeber 31 bestehen aus dem gleichen Kunststoffmaterial wie das Element 30 und können daher sehr vorteilhaft im Spritzguß zusammen mit dem Element hergestellt werden.

Eine andere Möglichkeit der Herstellung von Einzelelementen ist das Prägen von Endlosfolien, die anschließend in entsprechende Einzelelemente geschnitten werden. Fig. 12 zeigt den Schichtaufbau einer derartigen Endlosfolie 37. Eine selbsttragende Kunststoffolie 32 wird mit der Linsenstruktur 4 geprägt oder bereits mit der Linsenstruktur extrudiert. Die Unterseite der geprägten Folie 32 wird mit einer Klebstoffschicht 33 versehen, die eventuell mit einer Silikonschicht 34 abgedeckt werden kann. Die geprägte Seite der Folie 32 erhält eine Trennschicht 35 sowie eine darüber angeordnete Abdeckschicht 36, welche die Linsenstruktur vor Beschädigungen während der Aufbewahrung bzw. dem Stanzvorgang schützt. Die Abdeckschicht 36 kann in flüssigem Zustand aufgerakelt und anschließend gehärtet werden. Es ist selbstverständlich ebenso denkbar, die Prägung 4 nur in bestimmten Teilbereichen der Folie 32 vorzusehen.

Diese Endlosfolie 37 hat den Vorteil, daß sie kostengünstig unabhängig von der Datenträgerproduktion hergestellt und in Einzelelemente beliebigen Formats zerschnitten werden kann. Für den Übertrag auf den Datenträger wird die Folie 32 entweder vorgestanzt oder direkt während dem Übertrag gestanzt. Anschließend wird die Abdeckung 36 zusammen mit den nichtverklebten Folienresten abgezogen.

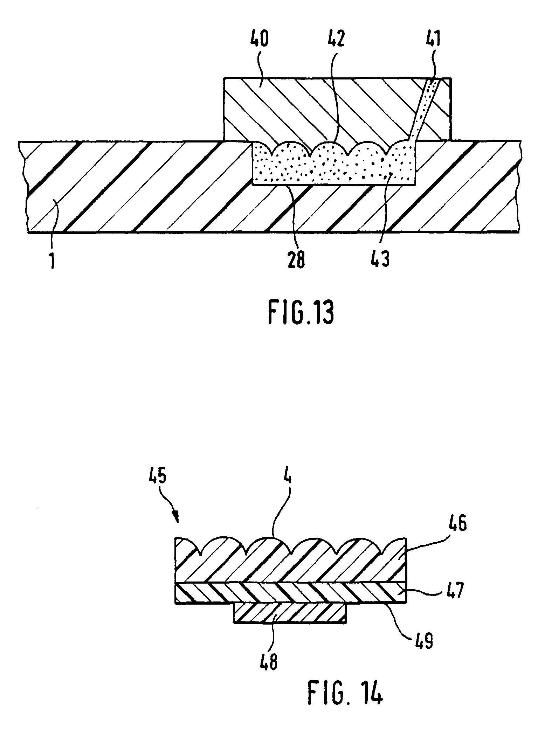

Eine weitere Variante, eine Karte mit einem Einzelelement zu versehen, zeigt Fig. 13. In diesem Fall wird in die Karte 1, analog zu dem in Fig. 10 dargestellten Verfahren, eine Aussparung 28 eingebracht. Anschließend wird in diese Aussparung 28 mittels Inmould-Technik das Linsenelement eingespritzt, d.h. statt dem Vorfertigen eines implantierbaren Einzelelements wird die gewünschte Elementform direkt in die Aussparung 28 der Karte 1 Die mit der Aussparung 28 versehene Karte 1 wird hierbei in eine Spritzgußvorrichtung eingebracht. In Fig. 12 ist aus Gründen der Anschaulichkeit lediglich die Gußform 40 dargestellt, welche selbstverständlich die negative Linsenstruktur 42 aufweisen muß. Über die Spritzdüse 41 wird anschließend das lichtdurchlässige bzw. transparente Elementmaterial 43 in die Aussparung 28 eingespritzt. Als Gußmaterialien kommen beispielsweise Thermoplaste oder lichthärtende, insbesondere UV-härtende Kunststoffe in Frage.

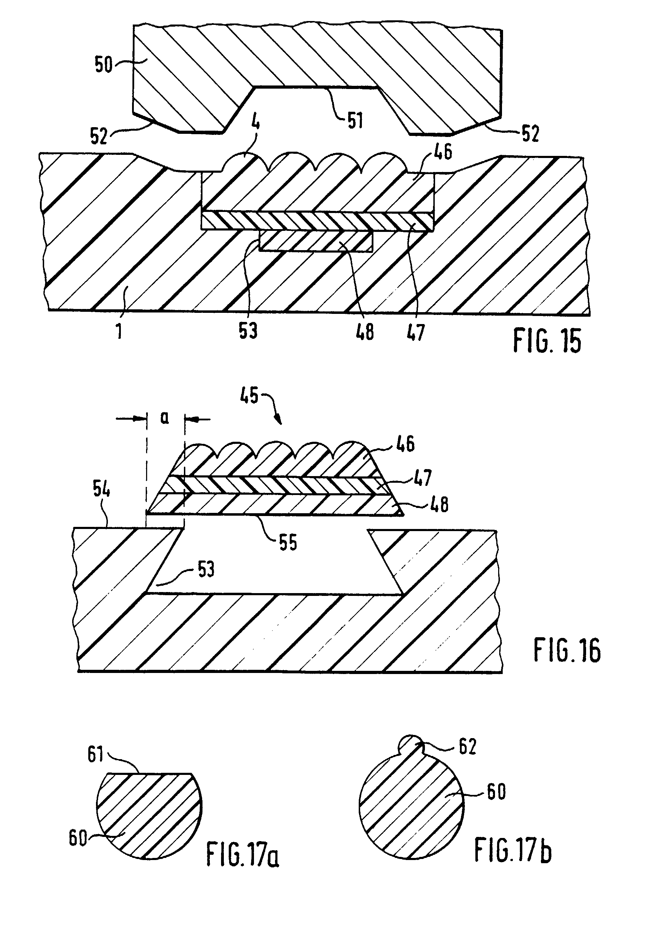

Das in Fig. 14 gezeigte Einzelelement 45 weist einen etwas komplizierteren Aufbau auf als das in Fig. 11 dargestellte. Es besteht aus drei Kunststoffschichten mit unterschiedlichen Eigenschaften. Die oberen Schichten 46 und 47 sind transparent und unterscheiden sich insbesondere hinsichtlich ihrer Absorptionseigenschaften für Laserstrahlung. Die Kunststoffschicht 46 ist weitgehend transparent für die bei der Beschriftung des Elements verwendete Laserstrahlung, während die Kunststoffschicht 47 für Laserstrahlung stark sensibel ist, d.h. daß die Einwirkung von Laserstrahlung in der Kunststoffschicht 47 eine visuell erkennbare farbliche Veränderung hervorruft. Die unterschiedliche Sensibilität für Laserstrahlung kann beispielsweise durch eine entsprechende Dotierung der Kunststoffschichten mit Rußpartikeln hervorgerufen werden, wobei eine höhere Dotierung gleichbedeutend ist mit einer schnelleren Veränderung des Kunststoffs. Um die Laserbeschriftung des Elements 45 zu erleichtern, ist unterhalb der Schicht 47 eine opake Schicht 48 angeordnet. Im gezeigten Beispiel ist sie nur im zentralen Bereich des Elements 45 vorhanden, sie kann jedoch auch vollflächig über der Schicht 47 vorgesehen werden. Die freibleibenden Randbereiche 49 erleichtern allerdings die Befestigung des Elements 45 im Datenträger 1. Es ist auch denkbar, auf die Schicht 48 vollständig zu verzichten, so daß das Element lediglich einen 2-Schicht-Aufbau aufweist.

Die Herstellung des Elements 45 kann auf verschiedene Arten erfolgen. So ist es beispielsweise möglich, das Einzelelement 45 direkt in Spritzgußtechnik zu erzeugen. Alternativ besteht auch die Möglichkeit, das Element 45 aus einem endlosen zwei- bzw. dreischichtigen Folienaufbau herauszustanzen. In diesem Fall wird zuerst in Endlosform der zwei- bzw. dreischichtige Folienaufbau (46, 47, 48) nach bekannten Methoden, wie Coextrusion oder Laminierung, erzeugt und mit der Linsenprägung 4 versehen. Die Prägung kann entweder vollflächig oder in bestimmten Abständen erfolgen. Anschließend werden die überschüssigen Bereiche der Folie 48 herausgefräst, so daß die Flächen 49 entstehen. Es ist allerdings auch möglich, in alle drei Schichten 46, 47, 48 zu fräsen, so daß die Flächen 49 in der Schicht 46 vorliegen. Schließlich wird das Einzelelement 45 aus dem Endlosband ausgestanzt, wobei dieser Vorgang während des Verklebens mit dem Datenträger 1 erfolgen kann. Das Element 45 kann selbstverständlich beliebige Geometrien aufweisen, vorzugsweise besitzt es allerdings eine runde oder rechteckige Form.

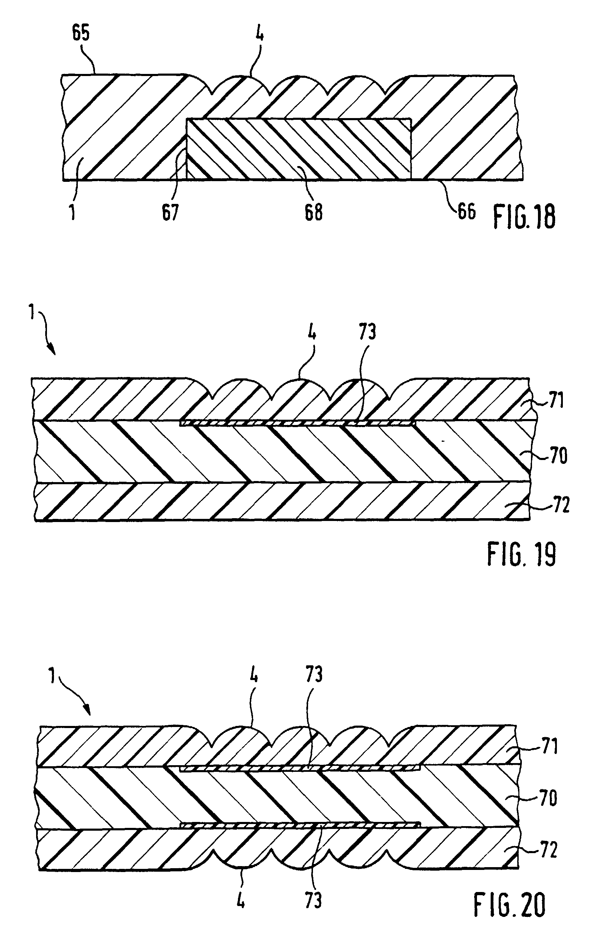

Für den Fall, daß das Element eine runde Form hat, kann es mit einer zusätzlichen Markierung versehen werden, um eine exakte Positionierung des Elements in der Karte zu ermöglichen. Fig. 17a und 17b zeigen zwei Varianten einer derartigen Registermarke. Gemäß Fig. 17a kann es sich um eine Abplattung 61 des Elements 60 handeln. Ebenso denkbar wäre eine Ausbuchung 62, wie in Fig. 17b dargestellt. Die Kartenaussparung weist selbstverständlich eine entsprechend angepaßte Form auf.

Das Element 45 wird schließlich in eine entsprechend geformte Aussparung 53 des Datenträgers 1 eingesetzt und mit diesem untrennbar verbunden. Fig. 15 zeigt schematisch, das bereits in den Datenträger 1 einlaminierte Element 45 sowie den Heizstempel 50 in ihrer gegenseitigen räumlichen Zuordnung.

Der Heizstempel 50 liegt während des Laminiervorgangs lediglich im Grenzbereich zwischen Datenträger 1 und Element 45 auf dem Datenträger/Element-Verbund auf. Im zentralen Bereich des Elements 45 weist der Stempel 50 dagegen eine Aussparung 51 auf, welche die Linsenstruktur 4 vor Zerstörung während des Laminiervorgangs schützt. Da das Datenträgermaterial sowie das Material des Elements 45 durch die Hitze- und Druckeinwirkung erweicht und in vorhandene Hohlräume zwischen Datenträger 1 und Element 45 fließt, entsteht im Auflagebereich des Stempels 50 eine übergangslose Oberflächenstruktur, die verhindert, daß das Element 45 aus dem Datenträger 1 herausgelöst und in einen anderen Datenträger eingesetzt werden kann. Gleichzeitig entsteht im Bereich der Aussparung unterhalb des Stempels 50 (hier ein ringförmiger Bereich) ein untrennbarer Verbund zwischen Datenträger 1 und Element 45, da im Bereich des Heizstempels das Datenträgermaterial sowie das Elementmaterial bis in den Bereich der Flächen 49 erweichen. Die Linsenstruktur 4 wird durch den Laminiervorgang im Auflagebereich des Stempels 50 weitgehend zerstört. Der um das Element 45 verlaufende Verbundbereich besitzt jedoch lediglich eine Breite von ca. 1 bis 2 mm, so daß nur ein kleiner Teil der Linsenstruktur zerstört wird. Ferner können aufgrund der kleineren Auflagefläche des Stempels Verzüge bei der Laminierung des Datenträgers verhindert werden. Der Stempel 50 kann im Verbundbereich glatt, mattiert oder auf andere Art oberflächlich strukturiert ausgeführt sein, um die Kontur des Übergangs zwischen Element 45 und Kartenkörper zu verbergen. Ferner kann der Stempel antihaftend beschichtet sein, um eine Verklebung zwischen Stempel und Kartenmaterial zu verhindern. Alternativ ist es auch möglich, eine silikonbeschichtete Folie als Zwischenlage einzusetzen. Um Materialansammlungen im Randbereich des Stempels 50, die durch die Verdrängung des Materials bei der Druckbeaufschlagung entstehen können, zu vermeiden, weist der Stempel in diesem Bereich 52 die Form einer Facette auf.

Der Verbund zwischen Datenträger 1 und Element 45 kann zusätzlich verbessert werden, indem die opake Schicht 48 mit einer Klebstoffschicht versehen wird. Die Klebstoffschicht kann hierbei auch vor der Herstellung des Einzelelements als vollflächige vierte Schicht bei der Herstellung des Folienaufbaus vorgesehen werden. Ein Klebstoff kann vor allem dann notwendig sein, wenn das Element eine sehr große Fläche einnimmt. Der Einsatz eines Klebstoffs ermöglicht es auch, unterschiedliche polymere Materialien für Datenträger und Element zu verwenden, wie z.B. ein besonders elastisches oder leicht verformbares Material für das Einzelelement und Polycarbonat oder PETG für den Datenträger.

Eine alternative Ausführungsform sieht vor, vollständigauf die Laminierung zu verzichten und einen Zweikomponentenkleber zu verwenden. Hierbei wird eine Komponente in die Aussparung eingebracht und die zweite Komponente auf das Element.

Gemäß einer weiteren Ausführungsform kann das Element 45 bzw. die Aussparung 53 trapezförmige Seitenkonturen aufweisen (Fig. 16). Aussparung 53 und Element 45 sind bezüglich ihrer Form so aufeinander abgestimmt, daß das Element beim Einsetzen in die Karte in die Aussparung 53 einrastet und dadurch eine zusätzliche Verankerung des Elements in der Karte entsteht. Der Anschaulichkeit halber wurde der Überlappungsbereich a zwischen Datenträgeroberfläche 54 und Elementunterseite 55 stark übertrieben dargestellt. In der Realität bewegt sich der Überlappungsbereich a in der Größenordnung von einigen 100 µm. Nach dem Einsetzen in die Karte wird das Element, wie bereits anhand von Fig. 15 beschrieben, mit dem Kartenkörper laminiert oder verklebt.

Gemäß der in Fig. 18 gezeigten Ausführungsform kann auch der Datenträger 1 die Linsenstruktur 4 aufweisen. In diesem Fall wird der Datenträger 1 als Spritzgußkörper hergestellt, welcher auf einer seiner Oberflächen 65 die Linsenstruktur 4 aufweist. Die der Linsenstruktur 4 gegenüberliegende Oberfläche 66 wird mit einer Aussparung 67 versehen, in welche ein Element 68 eingesetzt wird. Der Spritzgußkörper des Datenträgers 1 besteht aus transparentem oder transluzentem Material, wohingegen das eingesetzte Element 68 transparent oder opak sein kann und aus einer Folie ausgestanzt oder ebenfalls im Spritzguß hergestellt werden kann. Das Element 68 kann auf der innenliegenden, dem Kartenkörper zugewandten Seite speziell auf die Bedürfnisse der Laserbeschriftung abgestimmt sein. Die innenliegende Oberfläche kann beispielsweise mit einer Laserstrahlung absorbierenden, sensiblen Schicht bedruckt werden, in welcher durch die Laserstrahleinwirkung schwarze, zur Umgebung kontrastierende Zeichen erzeugt werden. Über dieser Lackschicht, welche Laserstrahlung absorbierende Zusatzstoffe enthält, kann eine für Laserstrahlung transparente oder weniger stark sensible Schicht angeordnet werden, welche für einen guten Verbund zum Datenträger sorgt. Alternativ kann auch das Kunststoffmaterial des Elements zumindest partiell mit Zusatzstoffen versetzt werden, welche die Laserstrahlung absorbieren. So könnte beispielsweise lediglich der dem Kartenkörper zugewandte Oberflächenbereich des Elements für die Laserbeschriftung sensibilisiert werden.

In Fig. 19 ist eine andere Lösung der erfindungsgemäßen Aufgabe dargestellt. Hier besteht der Datenträger 1 aus einem opaken Folieninlett 70, welches beidseitig mit transparenten Deckschichten 71, 72 im Spritzgußverfahren versehen wird. Eine dieser Schichten 71 erhält im Zuge des Spritzgußverfahrens lokal oder vollflächig die Linsenstruktur 4. Unterhalb des Linsenbereichs 4 kann auf dem Folieninlett eine für Laserbeschriftung sensible Schicht 73 vorgesehen werden, z. B. in Form einer transparenten, entsprechend vorbereiteten Lackschicht.

Gemäß einer Variante kann der Datenträger 1 auch beidseitig mit einer Linsenstruktur 4 und einer darunterliegenden lasersensiblen Schicht 73 versehen werden (Fig. 20). Hierbei müssen die Linsenstrukturbereiche nicht notwendigerweise kongruent zueinander angeordnet werden, sondern können an unterschiedlichen Stellen und mit beliebigen unterschiedlichen Umrißstrukturen angeordnet werden.

Bei den in Fig. 18 bis 20 dargestellten Datenträgern fluchtet, wie bei den meisten anderen Ausführungsformen der Erfindung, die Linsenstruktur mit der Oberfläche der Karte, so daß eventuell durch die unterschiedliche Kartendicke auftretende Probleme beim Stapeln der Karten vermieden werden.

Nachdem der Datenträger nach einem der erfindungsgemäßen Verfahren mit einer Linsenstruktur versehen wurde, wird er einer Laserbeschriftungsstation zugeführt. Dort werden die Kippbildinformationen durch die Linsenstruktur hindurch in das lichtdurchlässige Material eingeschrieben. Sinnvollerweise erfolgt die Beschriftung im Zuge der ohnehin notwendigen Personalisierung des Datenträgers, so daß unter Umständen ein für jeden Benutzer individueller Datensatz, bestehend aus direkt in den Datenträger zu lasernden Daten und Kippbildinformationen, die eventuell ebenfalls benutzerbezogen ausgelegt sein können, zusammengestellt und an die Lasersteuerung übergeben wird. Im Falle eines Beschriftungsfehlers kann der fehlerhafte Datenträger sofort aussortiert und durch einen nachfolgenden, noch nicht beschrifteten Datenträger mit Linsenstruktur ersetzt werden.

Das Material, welches mit der Linsenstruktur versehen wird, muß selbstverständlich zumindest im Bereich der Linsen lichtdurchlässig sein, damit die durch die Linsen hindurch eingebrachten Informationen lesbar sind. Bevorzugt werden transparente Materialien eingesetzt. Es ist jedoch auch möglich, eingefärbte transluzente Kunststoffe zu verwenden.

## Patentansprüche

1. Datenträger (1) mit einem Teilbereich, der eine Oberflächenstruktur in Form einer Linsenstruktur (4) aufweist, die in einer lichtdurchlässigen Kunststoffschicht (1, 14) vorgesehen ist und mit Informationen in Form von Zeichen oder Mustern, die zumindest teilweise durch die Oberflächenstruktur (4) mit Hilfe eines Lasers eingebracht sind, dadurch gekennzeichnet, daß die Scheitelbereiche der Linsenstruktur (4) mit der Ebene der Oberfläche des Datenträgers (1) bündig abschließen oder gegenüber der Oberfläche des Datenträgers (1) leicht versenkt sind.

2. Datenträger (1) nach Anspruch 1, dadurch **gekennzeichnet,** daß sich die Kunststoffschicht (1, 14) über den gesamten Datenträger (1) erstreckt.

3. Datenträger (1) nach Anspruch 1, dadurch **gekennzeichnet,** daß die mit der Oberflächenstruktur (4) versehene Kunststoffschicht (1, 14) als selbsttragendes Einzelelement (28, 45) ausgeführt ist, welches mit dem Datenträger verbunden ist.

4. Datenträger (1) nach Anspruch 3, dadurch **gekennzeichnet,** daß das Element (30, 45) als separates Einzelelement im Spritzguß gefertigt ist.

5. Datenträger (1) nach Anspruch 4, dadurch **gekennzeichnet,** daß das Element (45) aus Kunststoffschichten (46, 47, 48) mit unterschiedlichen Absorptionsverhalten für Laserstrahlung besteht, die gegebenenfalls stufenförmig angeordnet sind.

6. Datenträger nach wenigstens einem der Ansprüche 3 bis 5, dadurch **gekennzeichnet,** daß der Datenträger (1) eine Aussparung (28, 53) aufweist, in welche das Einzelelement (30, 45) eingesetzt ist.

7. Datenträger nach Anspruch 6, dadurch **gekennzeichnet,** daß die Aussparung (53) stufenförmig und das Element (45) entsprechend stufenförmig ausgeführt ist.

8. Datenträger nach Anspruch 7, dadurch **gekennzeichnet,** daß der Datenträger (1) und das Einzelelement (45) zumindest im Oberflächenbereich übergangslos ineinander übergehen.

9. Datenträger nach wenigstens einem der Ansprüche 1 bis 8, dadurch **gekennzeichnet,** daß die Oberflächenstruktur (4) aus Zylinder- und/oder Kugellinsen besteht, welche in Form eines beliebigen Musters angeordnet sind.

10. Datenträger nach Anspruch 1, dadurch **gekennzeichnet,** daß die Kunststoffschicht eine verformbare Lackschicht (14) ist und daß der Datenträger (1) zusätzlich eine Kunststoffolie aufweist, welche direkt an die Kunststoffschicht angrenzt, und daß die Oberflächenstruktur sowohl in der Kunststoffschicht als auch in der angrenzenden Folie vorliegt.

11. Halbzeug in Form eines Endlosbandes für die Herstellung von Datenträgern gemäß Anspruch 1, **gekennzeichnet** durch folgenden Schichtaufbau:
- eine selbsttragende, lichtdurchlässige Kunststoffolie (32), welche mit einer Oberflächenstruktur (4) versehen ist, und auf der der Oberflächenstruktur (4) gegenüberliegenden Oberfläche mit Noppen oder Streifen aus Kunststoff, die als Richtungsgeber (31) für die Ultraschallverschweißung mit dem Datenträger dienen,
- einer über der Oberflächenstruktur (4) angeordneten Trennschicht (35),
- einer über der Trennschicht (35) angeordneten Abdeckschicht (36), welche die Oberflächenstruktur (4) beispielsweise während des Aufbewahrens und eventueller Stanzvorgänge vor Beschädigungen schützt.

12. Halbzeug nach Anspruch 11, dadurch **gekennzeichnet,** daß die der Oberflächenstruktur (4) gegenüberliegende Oberfläche der Kunststoffschicht (32) mit einer Klebstoffschicht (33) und eventuell einer die Klebstoffschicht (33) abdeckenden Silikonschicht (34) versehen ist.

13. Halbzeug nach Anspruch 11 oder 12, dadurch **gekennzeichnet,** daß die Abdeckschicht (36) aus einer härtbaren Lackschicht besteht.

14. Halbzeug in Form eines Endlosbandes für die Herstellung von Datenträgern gemäß Anspruch 1, **gekennzeichnet** durch folgenden Schichtaufbau:
- eine zumindest für Laserstrahlung transparente Schicht (46), in welche die Oberflächenstruktur (4) zumindest in Teilbereichen eingeprägt ist,
- eine auf der der Oberflächenstruktur (4) gegenüberliegenden Seite angeordnete, Laserstrahlung absorbierende Schicht (47),
- eine über der absorbierenden Schicht (47) nur in bestimmten Teilbereichen angeordnete opake Schicht.

15. Halbzeug nach Anspruch 14, dadurch **gekennzeichnet,** daß die opake Schicht mit einer Klebstoffschicht abgedeckt ist.

16. Vorrichtung zur Herstellung eines Datenträgers (1) gemäß Anspruch 1, dadurch **gekennzeichnet,** daß die Vorrichtung (20) eine Vielzahl von Prägestationen (21) aufweist, die wenigstens ein Prägewerkzeug (15) umfassen, und die beweglich gelagert sind, so daß die Prägestationen (21), nachdem sie mit den zumindest bezüglich ihres Schichtaufbaus fertiggestellten Datenträgern (1) in Kontakt gebracht wurden, mit den Datenträgern (1) für einen vorbestimmten Zeitraum mitbewegt werden, um so die Oberflächenstrukturen (4) zu erzeugen.

17. Vorrichtung nach Anspruch 16, dadurch **gekennzeichnet,** daß jede der Prägestationen (21) eine eigene Heiz-/Kühlvorrichtung (27) aufweist.

18. Vorrichtung nach Anspruch 16, dadurch **gekennzeichnet,** daß die Vorrichtung (20) stationäre Heiz-/Kühlvorrichtungen (24, 25) aufweist, welche die Prägestation (21) zusammen mit dem Datenträger (1) durchlaufen.

19. Vorrichtung nach Anspruch 17 oder 18, dadurch **gekennzeichnet,** daß die Vorrichtung (20) eine Steuerung aufweist, welche die Heiz-/Kühlvorrichtung (24, 25, 27) entsprechend einer vorgegebenen Temperaturkurve aktiviert.

20. Vorrichtung nach wenigstens einem der Ansprüche 16 bis 19, dadurch **gekennzeichnet,** daß die Prägestationen (21) kreisförmig angeordnet sind und auf dieser Kreisbahn umlaufen können.

21. Vorrichtung zur Herstellung eines Datenträgers (1) gemäß Anspruch 1, dadurch **gekennzeichnet,** daß die Vorrichtung wenigstens eine Station mit einem spanabhebenden Werkzeug (5) aufweist, und das Werkzeug mit dem zumindest bezüglich seines Schichtaufbaus fertiggestellten Datenträger (1) in Kontakt gebracht wird, um so das Oberflächenrelief (4) zu erzeugen, wobei das spanabhebende Werkzeug (5) das negative Relief der zu erzeugenden Linsenstruktur (4) aufweist.

22. Vorrichtung nach Anspruch 21, dadurch **gekennzeichnet,** daß das spanabhebende Werkzeug (5) ein Hobel, eine Schleifeinrichtung, ein Fräswerkzeug oder ein Schleifzylinder ist.

23. Vorrichtung nach Anspruch 22, dadurch **gekennzeichnet,** daß die Vorrichtung eine Luftkühleinrichtung (6) aufweist, welche den zu bearbeitenden Datenträgerbereich kühlt.

24. Vorrichtung nach Anspruch 22, dadurch **gekennzeichnet,** daß das spanabhebende Werkzeug (5) eine Naßschleifeinrichtung ist.

25. Vorrichtung zur Herstellung eines Datenträgers (1) gemäß Anspruch 1, dadurch **gekennzeichnet,** daß die Vorrichtung wenigstens eine Station mit einem spanabhebenden Werkzeug (5) aufweist, und das Werkzeug mit dem zumindest bezüglich seines Schichtaufbaus fertiggestellten Datenträger (1) in Kontakt gebracht wird, um so das Oberflächenrelief (4) zu erzeugen, wobei das spanabhebende Werkzeug (5) ein Profilmeißel ist und wobei Mittel vorgesehen sind, welche den Profilmeißel oder den Datenträger heizen.

26. Vorrichtung nach Anspruch 25, dadurch **gekennzeichnet,** daß das spanabhebende Werkzeug eine negative Form eines Viertelkreises aufweist.

27. Vorrichtung nach Anspruch 25 oder 26, dadurch **gekennzeichnet,** daß diese eine Luftkühleinrichtung aufweist, welche den zu bearbeitenden Datenträgerbereich kühlt.

28. Vorrichtung zur Herstellung eines Datenträgers (1) gemäß Anspruch 1, dadurch **gekennzeichnet,** daß die Vorrichtung wenigstens eine Station mit einem spanabhebenden Werkzeug (5) aufweist, und das Werkzeug (5) mit dem zumindest bezüglich seines Schichtaufbaus fertiggestellten Datenträger (1) in Kontakt gebracht wird, um so das Oberflächenrelief (4) zu erzeugen, wobei das spanabhebende Werkzeug (5) eine Naßschleifeinrichtung ist.

29. Verfahren zur Herstellung eines Datenträgers gemäß Anspruch 1, dadurch **gekennzeichnet,** daß die Oberflächenstruktur mittels spanabhebender Verfahren in die Kunststoffschicht eingebracht wird.

30. Verfahren nach Anspruch 29, dadurch **gekennzeichnet,** daß die Oberflächenstruktur durch Schleifen, Hobeln oder Fräsen eingebracht wird.

31. Verfahren nach einem der Ansprüche 29 oder 30, dadurch **gekennzeichnet,** daß der zu bearbeitende Datenträgerbereich zusätzlich gekühlt wird.

32. Verfahren nach Anspruch 31, dadurch **gekennzeichnet,** daß mit Luft oder einer Schleifflüssigkeit gekühlt wird.

33. Verfahren nach Anspruch 29, dadurch **gekennzeichnet,** daß die Oberflächenstruktur mit einem Profilmeißel eingebracht wird.

34. Verfahren nach Anspruch 33, dadurch **gekennzeichnet,** daß der Profilmeißel beheizt wird.

35. Verfahren zur Herstellung eines Datenträgers gemäß Anspruch 1, dadurch **gekennzeichnet,** daß der Datenträger zumindest in Teilbereichen mit einer Kunststoffschicht in Form einer Lackschicht versehen wird und daß in diese Lackschicht die Oberflächenstruktur eingeprägt wird.

36. Verfahren nach Anspruch 35, dadurch **gekennzeichnet,** daß der unter der Lackschicht angeordnete Oberflächenbereich des Datenträgers ebenfalls geprägt wird.

37. Verfahren nach einem der Ansprüche 35 oder 36, dadurch **gekennzeichnet,** daß die Lackschicht in einem Druckverfahren, vorzugsweise im Siebdruck aufgebracht wird.

38. Verfahren nach wenigstens einem der Ansprüche 35 bis 37, dadurch **gekennzeichnet,** daß thermoplastische und/oder strahlungshärtbare Lacke oder Lacksysteme aus chemisch nicht reagierenden Komponenten verwendet werden.

39. Verfahren zur Herstellung eines Datenträgers gemäß Anspruch 1, dadurch **gekennzeichnet,** daß der Datenträger zumindest in Teilbereichen eine lichtdurchlässige Kunststoffschicht aufweist, und die Oberflächenstruktur unter stufenweiser Beaufschlagung von Temperatur und evtl. Druck in die Kunststoffschicht eingeprägt wird.

40. Verfahren nach Anspruch 39, dadurch **gekennzeichnet,** daß das Verfahren folgende Schritte aufweist:
- jeder Datenträger wird einer Prägestation zugeführt, in welcher er mit einem Prägestempel in Kontakt gebracht wird,
- Datenträger und Prägestempel werden zusammen entlang einer Transportstrecke bewegt,
- Datenträger und Prägestempel werden während des Transports entsprechend einer vorgegebenen Temperaturkurve zuerst beheizt und anschließend gekühlt und
- nach dem Kühlen wird der Prägestempel vom Datenträger abgenommen und der Datenträger wird aus der Prägestation entfernt.

41. Verfahren nach Anspruch 40, dadurch **gekennzeichnet,** daß mehrere Prägestationen vorgesehen werden, welche jeweils zeitlich versetzt zueinander einen Datenträger aufnehmen.

42. Verfahren nach Anspruch 40 oder 41, dadurch **gekennzeichnet,** daß jede Prägestation eine eigene Heiz- bzw. Kühlvorrichtung aufweist, die entsprechend der vorgegebenen Temperaturkurve beheizt bzw. gekühlt wird.

43. Verfahren nach Anspruch 40 oder 41, dadurch **gekennzeichnet,** daß eine stationäre Heiz-/Kühlvorrichtung vorgesehen wird, durch welche der Datenträger zusammen mit dem Prägestempel entsprechend einem vorgegebenen Maschinentakt bewegt wird.

44. Verfahren nach wenigstens einem der Ansprüche 40 bis 43, dadurch **gekennzeichnet,** daß der Prägestempel mittels einer Fixiervorrichtung auf dem Datenträger befestigt wird.

45. Verfahren nach Anspruch 44, dadurch **gekennzeichnet,** daß der Prägestempel mittels einer gespannten Feder, Druckluft oder elektrischen oder hydraulischen Spannvorrichtungen fixiert wird.

46. Verfahren zur Herstellung eines Datenträgers gemäß Anspruch 1, dadurch **gekennzeichnet,** daß eine lichtdurchlässige Kunststoffschicht mit einer Oberflächenstruktur in Form einer Linsenstruktur als separates Element hergestellt wird, der Datenträger mit einer Aussparung versehen wird, und das separate Element in dieser Aussparung befestigt wird.

47. Verfahren nach Anspruch 46, dadurch **gekennzeichnet,** daß der Datenträger mit einer stufenförmigen Aussparung versehen wird.

48. Verfahren nach Anspruch 46, dadurch **gekennzeichnt,** daß die Aussparung und das Element trapezförmig ausgeführt werden und das Element beim Einsetzen in die Aussparung einrastet.

49. Verfahren nach Anspruch 46 oder 48, dadurch **gekennzeichnet,** daß der Datenträger und das Einzelelement im Übergangsbereich zwischen beiden mit Hilfe eines Heizstempels laminiert werden.

50. Verfahren nach wenigstens einem der Ansprüche 46 bis 49, dadurch **gekennzeichnet,** daß der Heizstempel im inneren Bereich eine Aussparung aufweist, so daß die Oberflächenstruktur in diesem Bereich nicht zerstört wird und daß der Randbereich des Heizstempels in Form einer Facette ausgeführt ist.

51. Verfahren nach Anspruch 46, dadurch **gekennzeichnet,** daß die Aussparung durch Fräsen des fertigen Datenträgers oder entsprechendes Spritzgießen des Datenträgers hergestellt wird.

52. Verfahren nach wenigstens einem der Ansprüche 46 bis 51, dadurch **gekennzeichnet,** daß das Element mit dem Datenträger verklebt oder verschweißt wird.

53. Verfahren nach Anspruch 52, dadurch **gekennzeichnet,** daß das Element mittels Ultraschall mit dem Datenträger verschweißt wird.

54. Verfahren nach wenigstens einem der Ansprüche 46 bis 53, dadurch **gekennzeichnet,** daß das Element in Spritzgußtechnik oder Folienlaminiertechnik, gegebenenfalls aus unterschiedlichen Kunststoffen gefertigt wird.

55. Verfahren zur Herstellung eines Datenträgers gemäß Anspruch 1, dadurch **gekennzeichnet,** daß der Datenträger mit einer Aussparung versehen wird und daß direkt in der Aussparung eine lichtdurchlässige Kunststoffschicht mit einer Oberflächenstruktur in Form einer Linsenstruktur mittels Inmould-Technik erzeugt wird.

56. Verfahren zur Herstellung eines Datenträgers gemäß Anspruch 1, dadurch **gekennzeichnet,** daß eine Kunststoffschicht durch Spritzgießen erzeugt wird, wobei dieKunststoffschicht die Form eines Kartenkörpers erhält, welcher auf einer ersten Oberfläche mit einer Aussparung und auf der gegenüberliegenden Oberfläche im Bereich der Aussparung mit einer Oberflächenstruktur in Form einer Linsenstruktur versehen wird, und daß in die Aussparung ein Kunststoffelement eingebracht wird.

57. Verfahren nach Anspruch 56, dadurch **gekennzeichnet,** daß das Kunststoffelement aus einer opaken Folie ausgestanzt oder im Spritzguß hergestellt wird.

58. Verfahren nach Anspruch 56 oder 57, dadurch **gekennzeichnet,** daß das Element auf der dem Datenträger zugewandten Seite eine Beschichtung aufweist, die Laserstrahlung absorbierende Zusatzstoffe enthält.

59. Verfahren nach Anspruch 56 oder 57, dadurch **gekennzeichnet,** daß das Kunststoffelement zumindest in einem Teilbereich mit Laserstrahlung absorbierenden Zusatzstoffen versehen wird.

60. Verfahren zur Herstellung eines Datenträgers gemäß Anspruch 1, dadurch **gekennzeichnet,** daß der Datenträger zumindest auf einer Oberfläche im Spritzgußverfahren mit einer Kunststoffschicht versehen wird, die eine Oberflächenstruktur in Form einer Linsenstruktur aufweist, und anschließend der Datenträger einer Laserbeschriftungsstation zugeführt wird, welche durch die Linsenstruktur hindurch Kippbildinformationen in die lichtdurchlässige Kunststoffschicht einschreibt.

61. Verfahren nach Anspruch 60, dadurch **gekennzeichnet,** daß der Datenträger beidseitig mit einer Kunststoffschicht im Spritzgußverfahren versehen wird, welche in einem Teilbereich eine Oberflächenstruktur aufweist.

62. Verfahren nach Anspruch 61, dadurch **gekennzeichnet,** daß die Oberflächenstrukturen auf beiden Seiten der Folien kongruent zueinander angeordnet sind.

63. Verfahren nach wenigstens einem der Ansprüche 60 bis 62, dadurch **gekennzeichnet,** daß der Datenträger im Bereich der darüber angeordneten Oberflächenstruktur mit einer Beschichtung versehen wird, welche Laserstrahlung absorbierende Zusatzstoffe enthält.

## Claims

1. A data carrier (1) with a partial area having a surface structure in the form of a lens structure (4) provided in a transparent plastic layer (1, 14) and with information in the form of marks or patterns incorporated at least partly through the surface structure (4) with the aid of a laser, characterized in that the apex areas of the lens structure (4) are flush with the plane of the surface of the data carrier (1) or slightly sunk in from the surface of the data carrier (1).

2. A data carrier (1) according to claim 1, characterized in that the plastic layer (1, 14) extends over the entire data carrier (1).

3. A data carrier (1) according to claim 1, characterized in that the plastic layer (1, 14) provided with the surface structure (4) is executed as a self-supporting single element (28, 45) which is connected with the data carrier.

4. A data carrier (1) according to claim 3, characterized in that the element (30, 45) is produced as a separate single element by injection molding.

5. A data carrier (1) according to claim 4, characterized in that the element (45) consists of plastic layers (46, 47, 48) with different absorption behavior toward laser radiation, which are optionally disposed in steps.

6. A data carrier according to at least one of claims 3 to 5, characterized in that the data carrier (1) has a gap (28, 53) in which the single element (30, 45) is inserted.

7. A data carrier according to claim 6, characterized in that the gap (53) has a step-shaped design and the element (45) has a corresponding step-shaped design.

8. A data carrier according to claim 7, characterized in that the data carrier (1) and the single element (45) run smoothly into each another at least in the surface area.

9. A data carrier according to at least one of claims 1 to 8, characterized in that the surface structure (4) consists of cylinder and/or spherical lenses disposed in the form of any pattern.

10. A data carrier according to claim 1, characterized in that the plastic layer is a deformable lacquer layer (14), and the data carrier (1) additionally has a plastic foil directly adjoining the plastic layer, and the surface structure is present both in the plastic layer and in the adjoining foil.

11. A semifinished product in the form of an endless band for producing data carriers according to claim 1, characterized by the following layer structure:
a self-supporting, transparent plastic foil (32) provided with a surface structure (4), and on the surface opposite the surface structure (4) with plastic knobs or strips serving as directors (31) for ultrasonic welding to the data carrier,
a separation layer (35) disposed above the surface structure (4),
a cover layer (36) disposed above the separation layer (35) for protecting the surface structure (4) from damage for example during storage and any punching processes.

12. A semifinished product according to claim 11, characterized in that the surface of the plastic layer (32) opposite the surface structure (4) is provided with an adhesive layer (33) and possibly a silicone layer (34) covering the adhesive layer (33).

13. A semifinished product according to claim 11 or 12, characterized in that the cover layer (36) consists of a curable lacquer layer.

14. A semifinished product in the form of an endless band for producing data carriers according to claim 1, characterized by the following layer structure:
a layer (46) transparent at least to laser radiation into which the surface structure (4) is embossed at least in partial areas,
a layer (47) absorbing laser radiation disposed on the side opposite the surface structure (4),
an opaque layer disposed above the absorbing layer (47) only in certain partial areas.

15. A semifinished product according to claim 14, characterized in that the opaque layer is covered with an adhesive layer.

16. An apparatus for producing a data carrier (1) according to claim 1, characterized in that the apparatus (20) has a multiplicity of embossing units (21) which include at least one embossing tool (15) and are mounted movably so that the embossing units (21), after being brought in contact with the data carriers (1) completed at least with respect to their layer structure, are jointly moved with the data carriers (1) for a given time period in order to produce the surface structures (4).

17. An apparatus according to claim 16, characterized in that each of the embossing units (21) has its own heating/ cooling apparatus (27).

18. An apparatus according to claim 16, characterized in that the apparatus (20) has stationary heating/cooling apparatuses (24, 25) which run through the embossing unit (21) together with the data carrier (1).

19. An apparatus according to claim 17 or 18, characterized in that the apparatus (20) has a control which activates the heating/cooling apparatus (24, 25, 27) in accordance with a given temperature curve.

20. An apparatus according to at least one of claims 16 to 19, characterized in that the embossing units (21) are disposed in a circle and can circulate on this circular path.

21. An apparatus for producing a data carrier (1) according to claim 1, characterized in that the apparatus has at least one unit with a cutting tool (5), and the tool is brought in contact with the data carrier (1) completed at least with respect to its layer structure in order to produce the surface relief (4), the cutting tool (5) having the negative relief of the lens structure (4) to be produced.

22. An apparatus according to claim 21, characterized in that the cutting tool (5) is a plane, a grinding device, a milling tool or a grinding cylinder.

23. An apparatus according to claim 22, characterized in that the apparatus has an air cooling device (6) which cools the data carrier area being processed.

24. An apparatus according to claim 22, characterized in that the cutting tool (5) is a wet grinding device.

25. An apparatus for producing a data carrier (1) according to claim 1, characterized in that the apparatus has at least one unit with a cutting tool (5), and the tool is brought in contact with the data carrier (1) completed at least with respect to its layer structure in order to produce the surface relief (4), the cutting tool (5) being a profile chisel and means being provided for heating the profile chisel or data carrier.

26. An apparatus according to claim 25, characterized in that the cutting tool has a negative form of a quarter circle.

27. An apparatus according to claim 25 or 26, characterized in that it has an air cooling device which cools the data carrier area being processed.

28. An apparatus for producing a data carrier (1) according to claim 1, characterized in that the apparatus has at least one unit with a cutting tool (5), and the tool (5) is brought in contact with the data carrier (1) completed at least with respect to its layer structure in order to produce the surface relief (4), the cutting tool (5) being a wet grinding device.

29. A method for producing a data carrier according to claim 1, characterized in that the surface structure is incorporated in the plastic layer by cutting methods.

30. A method according to claim 29, characterized in that the surface structure is incorporated by grinding, planing or milling.

31. A method according to either of claims 29 and 30, characterized in that the data carrier area to be processed is additionally cooled.

32. A method according to claim 31, characterized in that cooling is done with air or a grinding liquid.

33. A method according to claim 29, characterized in that the surface structure is incorporated with a profile chisel.

34. A method according to claim 33, characterized in that the profile chisel is heated.

35. A method for producing a data carrier according to claim 1, characterized in that the data carrier is provided at least in partial areas with a plastic layer in the form of a layer of lacquer, and the surface structure is embossed into said lacquer layer.

36. A method according to claim 35, characterized in that the surface area of the data carrier disposed below the lacquer layer is likewise embossed.

37. A method according to either of claims 35 and 36, characterized in that the lacquer layer is applied by a printing process, preferably by screen printing.

38. A method according to at least one of claims 35 to 37, characterized in that thermoplastic and/or radiationcurable lacquers or lacquer systems from chemically nonreactive components are used.

39. A method for producing a data carrier according to claim 1, characterized in that the data carrier has at least in partial areas a transparent plastic layer, and the surface structure is embossed into the plastic layer with stepwise exposure to temperature and possibly pressure.

40. A method according to claim 39, characterized in that the method has the following steps:
each data carrier is supplied to an embossing unit in which it is brought in contact with an embossing die,
data carrier and embossing die are moved together along a transport path,
data carrier and embossing die are first heated and then cooled in accordance with a given temperature curve during transport, and
after cooling the embossing die is taken off the data carrier and the data carrier removed from the embossing unit.

41. A method according to claim 40, characterized in that a plurality of embossing units are provided which each receive a data carrier offset in time from one other.

42. A method according to claim 40 or 41, characterized in that each embossing unit has its own heating or cooling apparatus that is heated or cooled in accordance with the given temperature curve.

43. A method according to claim 40 or 41, characterized in that a stationary heating/cooling apparatus is provided through which the data carrier is moved together with the embossing die in accordance with a given machine phase.

44. A method according to at least one of claims 40 to 43, characterized in that the embossing die is fastened to the data carrier by fixing means.

45. A method according to claim 44, characterized in that the embossing die is fixed by a tensed spring, compressed air or electric or hydraulic chucking devices.

46. A method for producing a data carrier according to claim 1, characterized in that a transparent plastic layer with a surface structure in the form of a lens structure is produced as a separate element, the data carrier is provided with a gap, and the separate element is fastened in said gap.

47. A method according to claim 46, characterized in that the data carrier is provided with a step-shaped gap.

48. A method according to claim 46, characterized in that the gap and the element are of trapezoidal design and the element snaps into the gap upon insertion.

49. A method according to claim 46 or 48, characterized in that the data carrier and the single element are laminated in the transition area between the two with the aid of a heated die.

50. A method according to at least one of claims 46 to 49, characterized in that the heated die has a gap in the inner area so that the surface structure is not destroyed in this area, and the edge area of the heated die is executed in the form of a facet.

51. A method according to claim 46, characterized in that the gap is produced by milling the finished data carrier or suitably injection molding the data carrier.

52. A method according to at least one of claims 46 to 51, characterized in that the element is glued or welded to the data carrier.

53. A method according to claim 52, characterized in that the element is welded to the data carrier by means of ultrasound.

54. A method according to at least one of claims 46 to 53, characterized in that the element is produced by injection molding or the foil laminating technique, optionally from different plastics.

55. A method for producing a data carrier according to claim 1, characterized in that the data carrier is provided with a gap, and a transparent plastic layer with a surface structure in the form of a lens structure is produced directly in the gap by the inmold technique.

56. A method for producing a data carrier according to claim 1, characterized in that a plastic layer is produced by injection molding, whereby the plastic layer acquires the form of a card body which is provided with a gap on a first surface and with a surface structure in the form of a lens structure on the opposite surface in the area of the gap, and a plastic element is incorporated into the gap.

57. A method according to claim 56, characterized in that the plastic element is punched out of an opaque foil or produced by injection molding.

58. A method according to claim 56 or 57, characterized in that the element has on the side facing the data carrier a coating containing additives absorbing laser radiation.

59. A method according to claim 56 or 57, characterized in that the plastic element is provided at least in a partial area with additives absorbing laser radiation.

60. A method for producing a data carrier according to claim 1, characterized in that the data carrier is provided at least on one surface by injection molding with a plastic layer having a surface structure in the form of a lens structure, and the data carrier is then supplied to a laser inscription unit which inscribes tilt image information in the transparent plastic layer through the lens structure.

61. A method according to claim 60, characterized in that the data carrier is provided on both sides by injection molding with a plastic layer having a surface structure in a partial area.

62. A method according to claim 61, characterized in that the surface structures are disposed congruently to each other on both sides of the foils.

63. A method according to at least one of claims 60 to 62, characterized in that the data carrier is provided in the area of the surface structure disposed thereabove with a coating containing additives absorbing laser radiation.

## Revendications

1. Support de données (1) comportant une zone partielle, présentant une structure de surface réalisée sous la forme d'une structure lenticulaire (4), prévue dans une couche de matière synthétique (1, 14) transparente à la lumière, et avec des informations sous la forme de signes-caractères ou de motifs, qui sont introduites au moins partiellement dans la structure de surface (4) à l'aide d'un laser, caractérisé en ce que les zones de crête de la structure lenticulaire (4) sont délimitées de façon affleurée avec le plan de la surface du support de données (1) ou sont légèrement creusées par rapport à la surface du support de données (1).

2. Support de données (1) selon la revendication 1, caractérisé en ce que la couche de matière synthétique (1, 14) s'étend sur la totalité du support de données (1).

3. Support de données (1) selon la revendication 1, caractérisé en ce que la couche de matière synthétique (1, 14) dotée de la structure de surface (4) est réalisée comme élément individuel auto-porteur (28, 45), qui est relié au support de données.

4. Support de données (1) selon la revendication 3, caractérisé en ce que l'élément (30, 45) est fabriqué sous la forme d'élément individuel séparé, par moulage à injection.

5. Support de données (1) selon la revendication 4, caractérisé en ce que l'élément (45) est constitué de couches de matière synthétique (46, 47, 48) ayant des comportements en absorption différents pour le rayonnement laser, les couches étant le cas échéant disposées en forme de gradins.

6. Support de données selon au moins l'une des revendications 3 à 5, caractérisé en ce que le support de données (1) présente un évidement (28, 53) dans lequel l'élément individuel (30, 45) est inséré.

7. Support de données selon la revendication 6, caractérisé en ce que l'évidement (53) est réalisé en forme de degré et l'élément (45) est réalisé en forme de degré de façon correspondante.

8. Support de données selon la revendication 7, caractérisé en ce que le support de données (1) et l'élément individuel (45) s'enchaînent l'un à l'autre sans transition au moins dans la zone de surface.

9. Support de données selon au moins l'une des revendications 1 à 8, caractérisé en ce que la structure de surface (4) est constituée de lentilles cylindriques et/ou sphériques, disposées sous la forme d'un motif quelconque.

10. Support de données selon la revendication 1, caractérisé en ce que la couche de matière synthétique est une couche de vernis (14) déformable et en ce que le support de données (1) présente en plus une feuille de matière synthétique, directement limitrophe à la couche de matière synthétique, et en ce que la structure de surface est présente tant dans la couche de matière synthétique qu'également dans la feuille limitrophe.

11. Produit semi-fini réalisé sous la forme d'une bande continue pour la fabrication de supports de données selon la revendication 1, caractérisé par la structure de couche suivante :
- une feuille de matière synthétique (32) autoportante et transparente à la lumière, qui est dotée d'une structure de surface (4') et, sur la surface opposée à la structure de données (4), est munie de boutons ou des bandes en matière synthétique, servant d'indicateurs directionnels (31) pour la soudure aux ultrasons avec le support de données,
- une couche de séparation (35) disposée sur la structure de surface (4),
- une couche de recouvrement (36), disposée sur la couche de séparation (35) et qui protège des endommagements la structure de surface (4) par exemple pendant le stockage et les éventuels processus de découpage par estampage.

12. Produit semi-fini selon la revendication 11, caractérisé en ce que la surface, opposée à la structure de surface (4) de la couche en matière synthétique (32) est dotée d'une couche d'adhésif (33) et éventuellement d'une couche de silicone (34) recouvrant la couche d'adhésif (33).

13. Produit semi-fini selon la revendication 11 ou 12, caractérisé en ce que la couche de recouvrement (36) est constituée d'une couche de vernis durcissable.

14. Produit semi-fini réalisée sous la forme d'une bande continue pour la fabrication de supports de données selon la revendication 1, caractérisé par la structure de couche suivante :
- une couche (46) au moins transparente au rayonnement laser, dans laquelle la structure de surface (4) est au moins formée par pressage dans des zones partielles,
- une couche (47) absorbant le rayonnement laser, disposée sur la face opposée à la structure de surface (4).
- une couche opaque, disposée au-dessus de la couche absorbante (47), seulement dans des zones partielles déterminées.

15. Produit semi-fini selon la revendication 14, caractérisé en ce que la couche opaque est recouverte d'une couche d'adhésif.

16. Dispositif de fabrication d'un support de données (1) selon la revendication 1, caractérisé en ce que le dispositif (20) présente une pluralité de postes de façonnage de relief (21), qui comprennent au moins un outil de façonnage de relief ou d'emboutissage (15), et qui sont montés mobiles, de telle manière que les postes de façonnage de relief (21), après avoir été mis en contact avec les supports de données (1) fabriqués au moins quant à leur structure de couche, soient déplacés conjointement avec les supports de données (1) pendant une durée prédéterminée, pour générer ainsi le structures de surface (4).

17. Dispositif selon la revendication 16, caractérisé en ce que chacun des postes de façonnage de relief (21) présente un organe de chauffage/refroidissement (27).

18. Dispositif selon la revendication 16, caractérisé en ce que le dispositif (20) présente des postes de chauffage/refroidissement (24, 27) qui passent dans les postes de façonnage de relief, conjointement avec le support de données (1).

19. Dispositif selon la revendication 17 ou 18, caractérisé en ce que le dispositif (21) présente une commande qui active l'organe de chauffage/refroidissement (24, 25, 27) de manière correspondante à une courbe de température prédéterminée.

20. Dispositif selon au moins l'une des revendications 16 à 19, caractérisé en ce que les postes de façonnage (21) sont disposés en forme de cercle et peuvent circuler sur cette trajectoire circulaire.

21. Dispositif de fabrication d'un support de données (1) selon la revendication 1, caractérisé en ce que le dispositif présente au moins un poste ayant un outil (5) travaillant par enlèvement de copeaux et l'outil étant mis en contact avec le support de données (1) fabriqué au moins quant à sa structure de couche, afin de générer ainsi le relief (4) de la structure de surface, l'outil (5) travaillant par enlèvement de copeaux présentant le relief en négatif, de la structure lenticulaire (4) à générer.

22. Dispositif selon la revendication 21, caractérisé en ce que l'outil (5) travaillant par enlèvement de copeaux est un rabot, un organe de meulage, un outil de fraisage ou un cylindre de meulage.

23. Dispositif selon la revendication 22, caractérisé en ce que le dispositif présente un organe de refroidissement à air (6) refroidissant la zone de support de données à usiner.

24. Dispositif selon la revendication 22, caractérisé en ce que l'outil (5) travaillant par enlèvement de copeaux est un organe de meulage humide.

25. Dispositif de fabrication d'un support de données (1) selon la revendication 1, caractérisé en ce que le dispositif présente au moins un poste équipé d'un outil (5) travaillant par enlèvement de copeaux, et l'outil étant mis en contact avec le support de données (1) terminé au moins quant à sa structure de couche, afin de générer ainsi le relief de surface (4), l'outil (5) travaillant par enlèvement de copeaux étant un burin profilé et des moyens étant prévus pour chauffer le burin profilé ou le support de données.

26. Dispositif selon la revendication 25, caractérisé en ce que l'outil travaillant par enlèvement de copeaux présente une forme en négatif d'un quart de cercle.

27. Dispositif selon la revendication 25 ou 26, caractérisé en ce qu'il comporte un organe de refroidissement à air, qui refroidit la zone de support de données à usiner.

28. Dispositif de fabrication d'un support de données selon la revendication 1, caractérisé en ce que le dispositif comporte au moins un poste équipé d'un outil (5) travaillant par enlèvement de copeaux, et l'outil (5) étant mis en contact avec le support de données (1) terminé au moins quant à sa structure de couche, afin de générer ainsi le relief (4) de surface, l'outil (5) travaillant avec enlèvement de copeaux étant un organe de meulage humide.

29. Procédé de fabrication d'un support de données selon la revendication 1, caractérisé en ce que de surface est façonnée en creux dans la couche de matière synthétique, au moyen d'un procédé par enlèvement de copeaux.

30. Procédé selon la revendication 29, caractérisé en ce que la structure de surface est formée par meulage, rabotage ou fraisage.

31. Procédé selon l'une des revendications 29 ou 30, caractérisé en ce que la zone de support de données à usiner est l'objet d'un refroidissement supplémentaire.

32. Procédé selon la revendication 31, caractérisé en ce que le refroidissement est effectué avec de l'air ou un liquide de meulage.

33. Procédé selon la revendication 29, caractérisé en ce que la structure est formée avec un burin profilé.

34. Procédé selon la revendication 33, caractérisé en ce que le burin profilé est chauffé.

35. Procédé de fabrication d'un support de données selon la revendication 1, caractérisé en ce que le support de données est doté au moins dans des zones partielles d'une couche de matière synthétique réalisée sous la forme d'une couche de vernis, et en ce que la structure de surface est creusée dans cette couche de vernis.

36. Procédé selon la revendication 35, caractérisé en ce que la zone de surface, disposée sous la couche de vernis, du support de données est également soumise à un façonnage de relief.

37. Procédé selon l'une des revendications 35 ou 36, caractérisé en ce que la couche de vernis est appliquée dans un procédé d'impression, de préférence par sérigraphie.

38. Procédé selon au moins l'une des revendications 35 à 37, caractérisé en ce qu'on utilise des vernis ou des systèmes de vernis thermoplastiques et/ou durcissables par exposition à un rayonnement constitués de composants non réactifs chimiquement.

39. Procédé de fabrication d'un support de données selon la revendication 1, caractérisé en ce que le support de données présente au moins dans des zones partielles une couche de matière synthétique transparente à la lumière, et en ce que la structure de surface est formée par pressage dans la couche de structure sous application par degrés de température et éventuellement de pression.

40. Procédé selon la revendication 39, caractérisé en ce que le procédé présente les étapes suivantes :
- chaque support de données est associé à un poste de façonnage du relief, dans lequel il est mis en contact avec un poinçon (ou une matrice) de façonnage de relief,
- le support de données et le poinçon de façonnage de relief sont déplacés conjointement le long d'une voie de transport,
- le support de données et le poinçon de façonnage de relief sont d'abord chauffés puis refroidis pendant le transport, de manière correspondante à une courbe de température prédéterminée,
- après le refroidissement, le poinçon de façonnage de relief est dégagé du support de données et le support de données est enlevé du poste de façonnage de relief.

41. Procédé selon la revendication 40, caractérisé en ce que plusieurs postes de façonnage de relief sont prévus, recevant chacun un support de données, de façon temporellement décalée les uns par rapport aux autres.

42. Procédé selon la revendication 40 ou 41, caractérisé en ce que chaque poste de façonnage de relief présente un dispositif de chauffage ou de refroidissement qui est chauffé ou refroidi de manière correspondante à la courbe de température prédéterminée.

43. Procédé selon la revendication 40 ou 41, caractérisé en ce qu'est prévu un poste de chauffage/refroidissement fixe au moyen duquel le support de données est déplacé conjointement avec le poinçon de façonnage de relief, de manière correspondante à une cadence machine prédéterminée.

44. Procédé selon au moins l'une des revendications 40 à 43, caractérisé en ce que le poinçon de façonnage de relief est fixé sur le support de données, au moyen d'un organe de fixation.

45. Procédé selon la revendication 44, caractérisé en ce que le poinçon de façonnage est fixé au moyen d'un ressort précontraint, d'air comprimé ou d'organes serrure électriques ou hydrauliques.

46. Procédé de fabrication d'un support de données selon la revendication 1, caractérisé en ce qu'une couche de matière synthétique transparente à la lumière ayant une structure de surface réalisée sous la forme d'une structure lenticulaire est fabriquée sous la forme d'élément séparé, le support de données étant doté d'un évidement et l'élément séparé étant fixé dans cet évidement.

47. Procédé selon la revendication 46, caractérisé en ce que le support de données est doté d'un évidement en forme de gradins.

48. Procédé selon la revendication 46, caractérisé en ce que l'évidement et l'élément sont réalisés de façon trapézoïdale et l'élément est encliqueté dans l'évidement lors de la mise en place.

49. Procédé selon la revendication 46 et 48, caractérisé en ce que le support de données et l'élément individuel sont stratifiés dans la zone de transition entre les deux, à l'aide d'un poinçon chauffant.

50. Procédé selon au moins l'une des revendications 46 à 49, caractérisé en ce que le poinçon chauffant présente dans la zone intérieure un évidement de manière que la structure de surface ne soit pas détruite dans cette zone et en ce que la zone de bordure du poinçon chauffant est réalisée sous la forme d'une facette.

51. Procédé selon la revendication 46, caractérisé en ce que l'évidement est fabriqué par fraisage du support de données fabriqué ou bien par moulage par injection correspondant du support de données.

52. Procédé selon au moins l'une des revendications 46 à 51, caractérisé en ce que l'élément est collé ou soudé au support de données.

53. Procédé selon la revendication 52, caractérisé en ce que l'élément est soudé au support de données par utilisation d'ultrasons.

54. Procédé selon au moins l'une des revendications 46 à 53, caractérisé en ce que l'élément est fabriqué par la technique du moulage à injection ou par la technique de stratification de feuilles, le cas échéant à partir de matières synthétiques différentes.

55. Procédé de fabrication d'un support de données selon la revendication 1, caractérisé en ce que le support de données est doté d'un évidement et en ce que directement dans l'évidement est générée par une technique in-mould une couche de matière synthétique transparente à la lumière, ayant une structure de surface réalisée sous la forme d'une structure lenticulaire.

56. Procédé de fabrication d'un support de données selon la revendication 1, caractérisé en ce qu'une couche de matière synthétique est générée par moulage par injection, la couche de matière synthétique prenant la forme d'un corps de carte, qui est doté sur une première surface d'un évidement et sur la surface opposée dans la zone de l'évidement d'une structure de surface réalisée sous la forme d'une structure lenticulaire, et en ce qu'un élément de matière synthétique est introduit dans l'évidement.

57. Procédé selon la revendication 56, caractérisé en ce que l'élément en matière synthétique est fabriqué par découpage à partir d'une feuille opaque ou bien par moulage à injection.

58. Procédé selon la revendication 56 ou 57, caractérisé en ce que l'élément présente sur la face tournée vers le support de données un revêtement qui contient des additifs absorbant le rayonnement laser.

59. Procédé selon la revendication 57 ou 56, caractérisé en ce que l'élément en matière synthétique est doté au moins dans une zone partielle d'additifs absorbant le rayonnement laser.

60. Procédé de fabrication d'un support de données selon la revendication 1, caractérisé en ce que le support de données est doté au moins sur la surface par un procédé de moulage par injection d'une couche de matière synthétique, présentant une structure de surface réalisée sous la forme d'une structure lenticulaire, et en ce que le support de données est ensuite amené à un poste d'inscription au laser, qui inscrit dans la couche de matière synthétique transparente à la lumière des informations d'image basculante à travers la structure lenticulaire.

61. Procédé selon la revendication 60, caractérisé en ce que le support de données est doté sur les deux côtés d'une couche en matière synthétique, obtenue par un procédé de moulage par injection, couche qui présente une structure de surface dans une zone partielle.

62. Procédé selon la revendication 61, caractérisé en ce que les structures de surface sont disposées de façon congruente entre elles sur les deux faces des feuilles.

63. Procédé selon au moins l'une des revendications 60 à 62, caractérisé en ce que le support de données est doté dans la zone de la structure de surface placée au-dessus d'un revêtement de couche qui contient des additifs absorbant le rayonnement laser.
